# EUROPEAN PATENT SPECIFICATION

(11) **EP 1 521 149 B1**
(45) Date of publication and mention of the grant of the patent: **22.05.2013**
(21) Application number: 04023243.1
(22) Date of filing: 29.09.2004
(51) Int. Cl.: G05B 19/05

(54) **Programmable logic controller with variable name resolving means**
Speicherprogrammierbare Steuerung mit Mitteln zur Auflösung von Variablennamen
Automate programmable industriel avec moyens de résolution des noms des variables

(30) Priority: 02.10.2003 JP 2003344997; 22.09.2004 JP 2004275010
(43) Date of publication of application: 06.04.2005
(73) Proprietor: OMRON CORPORATION, Kyoto-shi, Kyoto 600-8530 (JP)
(72) Inventor: Oka, Minoru c/o Omron Corporation, Kyoto-shi Kyoto 600-8530 (JP); Hirata, Masuhisa c/o Omron Corporation, Kyoto-shi Kyoto 600-8530 (JP); Deki, Jintaro c/o Omron Corporation, Kyoto-shi Kyoto 600-8530 (JP)
(74) Representative: Kilian Kilian & Partner

(56) References cited:
- US-A- 5 406 473
- US-A- 5 513 095
- US-A- 5 845 149
- US-B1- 6 327 509

## Description

### BACKGROUND OF THE INVENTION

### 1. Field of the Invention

The invention relates to a programmable controller and communication unit, and a controller system and a method of processing data, and methods of solving variables and of handing data.

### 2. Description of the Related Art

A programmable controller (PLC) is used as a controller of Factory Automation (FA) installed in a production plant (manufacturing floor) . The PLC consists of a plurality of units. In other words, it is comprised of a proper combination of a power supply unit of power supply source, CPU unit that takes control of PLC as a whole, input unit that inputs a signal from such input devices as switches or sensors attached in place in production or facility equipment, output unit that gives control output to such output devices as actuators, etc., communication unit for connecting to a communication network, etc.

Control in the CPU unit of PLC will be exercised by cyclically repeating the steps of taking into an I/O memory of the CPU unit a signal from the input device that has been entered at the input unit (IN refresh) ; performing logical operations based on a user program written in a user program descriptive language (for example, a ladder language) that has been registered in advance (performance of arithmetic operations); writing result of the executed operations into the I/O memory and sending it out to the output unit (OUT refresh); and subsequently transmitting/receiving data to/from other PLCs on the communication network by way of the communication unit, or transmitting/receiving data to/from any external device by way of a communication port provided in the CPU unit (peripheral processes). In addition, as a result of OUT refresh, the output unit obtains an output signal from the CPU unit. Then, the output unit actuates the output devices based on the output signal.

In general, a user assigns a variable name to each of controls (control components) or internal contacts that are controlled by the input or output devices, so as to identify them easily. To cite an example of a variable name, one switch is assigned a variable name "Switch1" and another "Switch2". In other example, an internal contact to be taken in from other PLC for starting operations is assigned a variable name "READY" , while an internal contact to be taken in from other PLC for stopping operations is assigned a variable name "STOP". Then, using a programming tool, the user creates/edits a user program, and then can describe the contacts by the variable names.

On the other hand, when PLC executes a user program, it stores status of the input devices or that of the internal contacts or execution result of the user program in a specific area of a data memory in the CPU unit. Then, the data memory is allocated to the memory, and a memory address makes one-to-one correspondence with the data (input signal from the input devices, internal contacts, execution result of the user program) . In fact, when PLC executes a user program, it is based on a physical address of the memory, and not on a variable name. In addition, a user program described by a variable name will be compiled when it is stored into a user memory of the CPU unit of PLC. The compilation converts the variable name in the user program into a physical address. What the CPU unit actually executes is the program after being compiled, and contacts are programs expressed by physical addresses.

In addition, in recent years, a distributed controller system is used wherein a plurality of PLCs are connected by way of a network and control of FA as a whole is exercised by making collaboration, performing synchronized operation, etc., while sending and receiving data among the PLCs. Accordingly, in a network to which a plurality of PLCs are connected, transmission and reception of data actively take place among PLCs.

In general, to receive/transmit data between PLCs, addresses of data memories in the CPU units of the 2 PLCs one of which is sending and the other of which is receiving should be specified. The addressing could be implemented, if memories were allocated as described above and if it were known in advance which device contact corresponded to which memory address. In this case, a user should create a user program by using a physical address. Thus, the user who is the program author must be familiar with such internal structure as allocation of data addresses of PLC to/from which data is transmitted/receive or program structure, which would be complicated. In addition, if a physical address to which access is made is changed once the user program has been created, the user program should also be modified, which would be troublesome. Another problem is that if the user modifies the user program, it should be monitored whether the physical address of the other end is changed or not.

In order to solve the problem, as with the invention disclosed in Japan unexamined patent publication No. 11-184508, for instance, a program controller is provided that allows access to data by the variable name, while still enabling use of an official variable name on the communication device to access data.

In the invention disclosed in the Japan unexamined patent publication No.11-184508, a controller (CPU unit) was provided with a variable name conversion means that converted a variable name, which was a function name, into a physical address (real address) when other controller requested for access to a variable. This allows each PLC to send/receive data to/from other PLC by using a variable name, which will be very convenient to the user and can eliminate the need for changing a program as a result of transfer of data.

In the conventional technique described above, as the controller carried out communication processes involving conversion between a variable name and real address, load concentrated on the controller. In order to smoothly execute cyclic processes for taking control of the above-mentioned FA while addressing the conversion process between the variable name and real address, the controller should have enhanced resource/performance. Since increase in the number of PLCs comprising the distributed controller system adds to transmission/reception of data using variable names between PLCs, resources of the controller must be further built up. As the cyclic communication capacity (volume of data, number of nodes, etc.) depends on a controller, the capabilities of the distributed controller system have their limits.

### SUMMARY OF THE INVENTION

The invention is intended to provide a program controller and communication unit, and a controller system and a method' of processing data, and a method of solving variables, wherein when communications is established between program controllers, not only convenience of allowing variable names to be used for setup of communications is maintained, but also resources of the controller (CPU unit) for carrying out communication processes no longer needs to be increased.

The program controller according to the invention is comprised a controller that executes operations of a programmed program, and a programmable controller provided with a communication unit that communicates with other communication units through a network, wherein the controller has a memory means of storing a table of variables that associates variable names with real addresses that identify areas where data associated with the variable names is stored, wherein the communication unit has a communication setup information memory device of storing communication setup information that identifies variable names targeted for communications among the other communication units, and wherein the communication unit comprises a variable solution device that acquires the real addresses corresponding to the variable names stored by the communication setup information memory device by making inquiries about them to the controller with predetermined timing, and stores and retains the table that associates the variable names with the real addresses. The invention is capable of setting communications by using the variable names to the communication units, when it sets up communications in advance to establish communications among the programmable controllers. In addition, since the communication units checks with the controller about variable names when setting communications, the communication units can always obtain correct information on the variable names. The invention addresses the programmable controller of a first embodiment and the programmable controller including the communication unit on the side of the originator of a second embodiment.

The communication setup information shall be information that associates the variable names targeted for the communications, reception attributes, sender addresses of data targeted for communication, and variable names at the sender. The communication units can be configured to comprise a means for requesting the communication unit at the sender address for identification information for identifying data to be transmitted, and a means that associates with the real addresses the identification information sent from the communication unit at the sender address in response to the request and stores it, and that enables provision to the controller of data transmitted together with the identification information during communications. What we meant here by "enables provision" is that, as shown in the embodiment, the communication units may write to shared RAM from which the controller (CPU unit) can obtain data at given timing, or the communications units may transfer data to the controller. In short, it would be acceptable if the obtained data could be finally handed to the side of controller. In addition, the identification information corresponds to a cyclic communication IDs in the embodiment. This configuration is directed to the programmable controller that will be the side requesting for establishment of communications, if communications is established with other communication unit. In other words, it addresses the second programmable controller of the first embodiment. Also, if communications could be established, the communication unit could do without increasing resources of the controller (CPU unit) as it hands to the controller data it obtained through communications.

In addition, the communication setup information shall be information that associates the variable names targeted for the communications with transmission attributes, and the communication unit can be configured to comprise a means of sending back the identification information of the data, when it receives from the communication unit, which is other party of communications, a request for acquisition of identification information for identifying data to be communicated with the communication unit, which is the other party of the communications, and a means of transmitting the data targeted for communications with the identification information attached thereto. In addition, identification information corresponds to cyclic communication ID in the embodiment. This configuration is directed to a programmable controller on the side that is requested to establish communications, when communications is established with other communication unit. In other words, it addresses the first programmable controller of the first embodiment. Then, communications can be established with any programmable controller having the configuration described in the last paragraph. If communications could be established, the communication unit could do without increasing resources of the controller (CPU unit) in order to process communications, because it hands to the controller data it obtained by communicating.

On one hand, the communication unit of the invention suitable for implementation of the programmable controller mentioned above shall be a communication unit that connects, through a system bath, the controller provided with a table of variables that associates variable names with real addresses where data associated with the variable names is stored, wherein the communication unit is configured to comprise a communication setup information memory device of storing communication setup information that identifies variable names targeted for communications in the communication unit, and a variable solution device that obtains real addresses associated with the variable names stored in the communication setup information memory device, by making inquiries about them to the controller with predetermined timing, and stores and retains the table that associates the obtained real addresses with the variable names. The communication unit of this invention can use variable names to the communication unit in order to set communications, when it does setup of communications, in advance, for communicating with other communication units. Since the communication unit checks variable names with the controller when setting communications, the communication unit can always obtain correct information on the variable names. In addition, the communication unit of the invention addresses the communication unit on the side of originator of the second embodiment as well as the first and second communication units of the first embodiment.

Then, the communication setup information shall be information that associates the variable names targeted for the communications, reception attributes, sender addresses of data targeted for communication, and variable names at the sender, and the communication unit?? can be configured to comprise a means of requesting the communication unit at a sender address for acquisition of identification information for identifying data to be communicated, and a means that associates the identification information sent from the communication unit at the sender address in response to the request and stores it, and that enables provision to the controller of data transmitted together with the identification information during communications.

In addition, the communication setup information shall be information that associates the variable names targeted for the communication with transmission attributes, and can be designed to transmit a means of sending back identification information corresponding to the data, and the data targeted for communications with the identification information attached, when an identification information acquisition request for identifying data to be communicated from the communication unit of other end of communications is received.

In addition, the controller system according to the invention is configured by a plurality of programmable controllers that are connected through the network, and can be such configured that the plurality of programmable controllers include at least one each of programmable controller mentioned (at least) in Claim 2 and the programmable controller mentioned in Claim 3, and that transmission and reception of data among the plurality of programmable controllers are carried out by using the identification information and identifying the data. A controller system according to the invention can do advance communication setup by using variable names. In order to transmit/receive data between mutual program controllers, it can also establish communications and both can share data. It can save resources of a controller (CPU unit) for executing processes for data transmission/reception among the programmable controllers.

In addition, the variable solution method according to the invention is a variable solution method in the programmable controller provided with the controller that operates and executes a programmed program, and shall be the method wherein the communication unit that communicates with other communication units through the network, wherein the controller has a means of storing the table of variables that associates variable names with corresponding real addresses, wherein the communication unit has a communication setup information memory device of storing communication setup information that identifies the variable names to be targeted for communications among other communication units, wherein the communication unit, with predetermined timing, makes inquiries to the controller about the real addresses corresponding to the variable names stored in the communication setup information memory device, wherein the controller sends back the real addresses corresponding to the variable names in response to the inquiries, wherein the communication unit creates the table that associates the real addresses that have been sent back with the variable names targeted for communications, and stores it in the memory means. The method enables variable names to be used for advance communication setup. As the communication unit obtains information on variable names from the CPU unit, it can always obtain correct information and is thus immune from acquisition of incorrect information.

In the method, the communication setup information is information that associates the variable names targeted for the communications, reception attributes, sender addresses of data targeted for communications, and variable names at senders, and the communication unit enables provision to the controller of data transmitted together with the identification information during communications, by not only issuing a request for acquisition of identification information that identifies data to be communicated and obtaining the identification information transmitted from the communication unit at the sender address in response to the request, but also associating the acquired identification information with the real addresses and storing it.

In addition, a method of processing data in the communication unit according to the invention is a method of processing data in the communication unit that connects by way of a system bus to the controller provided with a table of variable names that associates variable names with real addresses where data associated with the variable names is stored, wherein the method is designed to store and retain communication setup information that identifies variable names targeted for communications among the communication units of other end of communication, and to store and retain a table that associates the real addresses sent back from the controller with the variable names, by not only extracting variable names stored in the stored and retained communication setup information but also making inquiries about the real addresses associated with the extracted variable names to the controller. This method allows variable names to be used for advance communication setup. As the communication unit obtains information on variable names from the CPU unit, it can always obtain correct information and is thus immune from acquisition of incorrect information.

Furthermore, the variable solution method in the controller system according to the invention is a variable solution method in a controller system that not only comprises a plurality of programmable controllers provided with a controller that operates and executes a programmed program and a communication unit that communicates with other communication units through a network and that is but also such configured that the plurality of programmable controllers are connected to the network, and is the method wherein the controller stores a table of variables that associates the variable names and real addresses where data associated with the variable names is stored, wherein the communication unit stores communication setup information that associates variable names for identifying variable names to be targeted for communications with other communication units, transmission/reception attributes, sender addresses of data, and variable names at senders, wherein the communication unit, with predetermined timing, makes inquires to the controller about real addresses associated with variable names stored in the communication setup information, wherein the controller sends back the real addresses associated with the variable names in response to the inquiries, wherein the communication unit creates and stores a table that associates the real addresses that have been sent back and variable names targeted for communications, the communication unit further detects the transmission/reception attributes, and if it is reception attribute, issues a request to the communication unit at the sender address specified based on the sender addresses, for acquisition of identification information that identifies data to be communicated, and not only acquires identification information sent from the communication unit at the sender address in response to the request, but also enables provision to the controller data transmitted together with the identification information during communications, by associating the acquired identification information and the sent back real addresses. This method enables variable names to be used for advance communication setup. As the communication unit obtains information on variable names from the CPU unit, it can always obtain correct information and is thus immune from acquisition of incorrect information. Then, communication is established for data transmission/reception between both mutual programmable controllers, so that both can share data. In addition, the method can save resources of the controller (CPU unit) designed to process data transmission/reception among the programmable controllers.

In addition when the variable solution method described in the last paragraph is applied to the method of handing data, the method shall be the method of handing data in a controller system that comprises a plurality of programmable controllers provided with a controller that operates and executes a program programmed by means of variables, and a communication unit that communicates with other nodes connected to network, but also the plurality of programmable controllers are connected through the network and configures, wherein variables are solved by the variable solution method described in the last paragraph and the communication units connected through the network can transmit/receive data with the identification information attached.

In addition, the communication units that have data on reception attributes transmit a cyclic period of data targeted for cyclic communications to the communication units that have the transmission attributes, and the communication units having the transmission attributes and received the cyclic period can transmit corresponding data assigned the identification information for each of the cyclic period.

### [NEW]

A programmable controller according to the invention is comprised of a controller that operates and executes a programmed program, and a programmable controller that comprises a communication unit communicating with other communication units through a network, wherein the controller has a table of variables that associates real addresses of memories where data is stored and variable names corresponding to the data, and stores them, wherein the communication unit is configured to comprise a communication setup information memory device that stores communication setup information that identifies variable names targeted for communications, and a variable solution device that obtains, with predetermined timing, a table that associates the variable names targeted for communication with buffer areas and stores them, and the real addresses corresponding to the variable names stored in the table, by making inquiries to the controller, and stores and retains the table that associates the variable names and the obtained real addresses.

When doing communications setup in advance for communications among programmable controllers, the programmable controller can do so by using variable names to communication units. The communication units can reliably and accurately obtain information on the variable names from the CPU unit. In addition, since the communication units store information on association between variable names and real addresses, processing capacity of'the communication units when data is communicated between controllers will expand, thereby reducing load on the CPU unit. The controllers herein correspond to the CPU unit of the embodiment. In addition, the table shall have information on variable names of data targeted for communications, and includes the communication buffer table of the embodiments 2 to 4 and the assembly table of the embodiments 5 and 6. The invention addresses not only the programmable controllers (on the side of originator) of each of the second to sixth embodiments, but also the programmable controllers (on the side of originator) in the variants of each of the second to sixth embodiments.

Said communication setup information is the information that associates the variable names targeted for the communications, transmission and reception attributes, sender addresses of the data targeted for communications, and variable names at the senders, and the communication units can be configured to have a means of requesting the communication unit at the sender address to acquire identification information for identifying data to be communicated, and a means of storing and associating the identification information transmitted from the communication unit at the sender address in response to the request with real addresses obtained by the variable solution device, and enabling provision to the controller of data transmitted together with the identification information during communications. The configuration addresses the programmable controllers (on the side of originator) of the second to fourth embodiments, and the programmable controllers (on the side of originator) in variants of the second to fourth embodiments.

In addition, the table of the communication units can be configured to be an assembly table in which the variable names targeted for communications, assembly names that grouped the variable names, and buffer areas are associated and stored, and the communication setup information of the communication units can be configured as the information that associates the assembly names targeted for the communications, transmission and reception attributes, sender addresses of the data targeted for communications, and assembly names at the sender. The configuration addresses the programmable controllers (on the side of originator) of the fifth and sixth embodiments, and the programmable controllers (on the side of originator) of the fifth and sixth embodiments.

A programmable controller according to the invention is comprised of a controller that operates and executes a programmed program, and a programmable controller provided with a communication unit that communicates with other communication units through a network, wherein the controller has a variable table that associates and stores real addresses of a memory where data is stored with variable names corresponding to the data, wherein the communication unit is configured to have a variable solution device that, with predetermined timing, obtains a table that associates and stores variable names and buffer areas targeted for communications with the other communication units, and real addresses associated with the variable names stored in the table, by making inquiries to the controller, and stores and retains a table that associates the variable names and the obtained real addresses, and a communication establishment process means that receives communication setup information for identifying the variable names targeted for communications from other communication units. When doing communications setup in advance for communications among programmable controllers, the programmable controller can do so by variable names to the communication unit. In addition, when executing communication establishment process, the communication unit can reliably check with the CPU unit about information on variable names, and thus prevent any error in establishment of communications. Also, as the communication unit stores information on association between variable names and real addresses on its side, and, using the information, can do a part of the process for communicating data among controllers, it can reduce load on the CPU unit. The controller herein corresponds to the CPU unit. In addition, a table shall have information on variable names of data targeted for communications, and includes the communication buffer tables of the embodiment 2 to 4 and the assembly tables of the embodiment 5 and 6. The invention addresses the programmable controllers on the side of target in the second to sixth embodiments, and the programmable controllers on the side of target in the variants of the second to sixth embodiments.

Said communication setup information to be received by the communication establishment process means includes the variable names targeted for the communications and transmission/reception attributes, the communication establishment process means generates connection identification information for data communications with other communication units when receiving the communication setup information, and transmits the generated identification information to the other communication units, and the communication unit can be configured to comprise a means of enabling provision to the controller of the data transmitted together with the identification information from the other communication units. The configuration addresses the programmable controllers on the side of target of the second to fourth embodiments. In addition, the table of the communication unit can be configured to be an assembly table in which variable names targeted for communications, assembly names that grouped the variable names, and buffer areas are associated and stored, and communication setup information of the communication unit can be configured as the information that associates the assembly names targeted for communications, transmission and reception attributes, sender addresses of the data targeted for communications, and assembly names at the sender. The configuration addresses the programmable controllers on the side of target of the fifth and sixth embodiments.

A programmable controller according to the invention is comprised of a controller that operates and executes a programmed program, and a programmable controller provided with a communication unit that communicates with other communication units through a network, wherein the controller has a variable table that associates and stores real addresses of a memory where data is stored with variable names corresponding to the data, wherein the communication unit has a table that associates and stores the variable names and buffer areas targeted for communications with the other communication units, and a communication establishment process means that receives communication setup information for identifying the variable names targeted for communications from the other communication units, and the communication unit is configured to comprise a variable solution device that obtains, with timing after the communication establishment process means received the communication setup information, real addresses associated with the variable names included in the communication setup information, by making inquiries to the controller, and stores and retains a table that associates the variable names with the obtained real addresses. The programmable controller is based on the assumption that a user programs by using a variable name, or does communication setup for communication units of the controller by using a variable name. Then, the controller stores in a table information that associates a variable with a real address. The communication unit then makes an inquiry to the CPU unit about information on the variable name, with the timing after the communication establishment process means received the communication setup information. This allows the communication unit to reliably and accurately check with the CPU unit about the information on the variable name, when the communication establishment process is executed. In addition, since the communication unit stores information on association between the variable name and real address on its side, and, using the information, can do a part of the process for data communications among controllers, it can reduce load on the CPU unit. The controller herein corresponds to the CPU unit of the embodiment. In addition, a table shall have information on the variable names of data targeted for communications, and include the communication buffer tables of the embodiments 2 to 4, and the assembly tables of the embodiments 5 and 6. The invention addresses the programmable controllers on the side of target in variants of the second to sixth embodiments.

In the programmable controller, the communication setup information received by the communication establishment process means includes the variable name targeted for the communication and transmission/reception attributes, the communication establishment process means generates connection identification information to be data communicated with other communication units when receiving the communication setup information, and transmits the generated identification information to the other communication units, and the communication unit is configured to comprise a means that enables provision to the controller of the data transmitted together with the identification information from the other communication units. The invention addresses the programmable controller on the side of target in variants of the second to fourth embodiments.

In addition, the programmable controller can configure a table of the communication unit to be an assembly table in which variable names targeted for communications, assembly names that grouped the variable names, and buffer area are associated and stored, and the communication setup information of the communication unit to be the information that associates the assembly names targeted for the communications, transmission and reception attributes, sender addresses of the data targeted for communications, and assembly names at the sender. The invention addresses the programmable controllers on the side of target in variants of the fifth and sixth embodiments.

On one hand, a communication unit according to the invention that is suitable for implementation of the programmable controller mentioned above not only connects, through a system bus, to the controller provided with a variable table that associates and stores real addresses of a memory where data is stored with variable names of the data, but also is a communication unit that communicates with other communication units through the network and is configured to have, within the communication unit, a communication setup information memory device that stores communication setup information identifying variable names targeted for communications, and a variable solution device that obtains, with predetermined timing, a table that associates and stores the variable names targeted for communications and buffer areas, and the real addresses associated with the variable names in the table, by making inquiries to the controller, and stores and retains a table that associates the variable names and the obtained real addresses. The communication unit of the invention can reliably and accurately obtain information on association between the variable names and real addresses from the CPU unit. Also, as it stores information that associates the variable name with the real name, for example, processing capacity of the communication unit when communicating data among other communication units expands, and thus load on the CPU Unit can be reduced only worth for the expansion. A table that refers to information on the variable names of the data targeted for communications when the variable solution device of the communication unit makes inquiries to the controller shall include the communication buffer tables of the embodiments 2 to 4 and the assembly tables of the embodiments 5 and 6. The communication unit of the invention shall include the first and second communication units of the second to sixth embodiments. It also includes the communication unit on the side of originator in variants of the second to sixth embodiments.

A method of solving variables according to the invention is a method of solving variables in a programmable controller provided with a controller that operates and executes a programmed program and a communication unit that communicates with other communication units through a network, wherein the controller has a variable table that associates and stores real addresses of a memory where data is stored with variable names corresponding to the data, the communication unit has a communication setup information memory device that stores communication setup information identifying variable names targeted for communications with other communication units, and a table that associates and stores the variable names targeted for communications and buffer areas, the communication unit makes an inquiry to the controller about the real addresses corresponding to the variable names stored in the table, in response to the inquiry the controller sends back the real address corresponding to the variable name by referring to the variable table, and the communication unit creates and stores a table that associates the returned real address with the variable name targeted for communications. The method allows the communication unit to reliably and accurately check with the CPU unit about the variable name. As it receives information directly from the CPU unit itself, the communication unit can always obtain correct information and is immune from acquisition of incorrect information. The method of solving variables is executed in the communication units on the side of originator of the second to sixth embodiments and also in the communication units on the side of originator of the second to sixth embodiments.

A communication unit according to the invention not only connects, by way of a system bus, to a controller provided with a variable table that associates and stores real addresses of a memory where data is stored and variable names corresponding to the data, but also establishes communications with other communication units through a network, and is configured to comprise a table that associates and stores, within the communication unit, variable names targeted for communications and buffer areas, communication establishment process means that receives a communication establishment request for identifying the variable name targeted communications, and the variable solution device that obtains, with predetermined timing, real addresses associated with the variable names stored in the table , by making an inquiry to the controller, and stores and retains a table that associates the variable name and the obtained real address. The communication unit of this invention can reliably and accurately obtain information on association between a variable name and real address from the CPU unit. Also, as it stores information that associates the variable name with the real name, for example, processing capacity of the communication unit when communicating data among other communication units expands, and thus load on the CPU Unit can be reduced only worth for the expansion. The table that refers to the information on the variable names of the data targeted for communications when the variable solution device of the communication unit makes an inquiry to the controller shall include the communication buffer tables of the embodiments 2 to 4 and the assembly tables of the embodiments 5 and 6. The communication unit of the invention addresses the communication units on the side of target of the second to sixth embodiments and the communication units on the side of target in variants of the second to sixth embodiments.

A method of solving variables according to this invention is the method of solving variables in a programmable controller provided with a controller that operates and executes a programmed program and a programmable controller that communicates with other communication units through a network, wherein the controller has a variable table that associates and stores real addresses of a memory where data is stored and variable names corresponding to the data, the communication unit has a communication establishment process means that receives a communication establishment request for identifying variable names targeted for communications from other communication units, and a table that associates and stores the variable names targeted for communications and buffer areas, the communication unit makes an inquiry to the controller about the real address associated with variable names stored in the table , in response to the request the controller refers to the variable table and sends back the real address associated with the variable name, and the communication unit creates and stores a table that associates the returned real address with the variable name targeted for communications. This method allows the communication unit to reliably obtain the real address associated with the variable name from the CPU unit. Since it receives the information directly from the CPU unit itself, the communication unit can always obtain correct information and is immune from acquisition of incorrect information. The method of solving variables is executed in the communication units. on the side of target of the second to sixth embodiments and in the communication units on the side of target in variants of the second to sixth embodiments.

A communication unit according to this invention not only connects, by way of a system bus, to a controller provided with a variable table that associates and stores real addresses of a memory where data is stored and variable names corresponding to the data, but also is a communication unit that communicates with other communication units through a network, and is configured to have a table that associates and stores in the communication unit variable names targeted for communications with other communications units and buffer areas, a communication establishment process means that receives a communication establishment request for identifying the variable names targeted for communications from the other communication units, and a variable solution device that obtains, with the timing after the communication establishment process means receives a communication establishment request, the real address associated with the variable name included in the communication establishment request, by making an inquiry to the controller, and stores and retains a table that associates the variable name and the obtained real address. The communication unit of the invention can reliably and accurately obtain information on association between a variable name and real address from the CPU unit. As it also stores information that associates a variable name with real address, for example, processing capacity of the communication unit when communicating data with other communication units expands and thus load on CPU unit can be reduced only worth for the expansion. A table that refers to the information on the variable names of the data targeted for communications when the variable solution device of the communication unit makes an inquiry to the controller shall include the communication buffer tables of the embodiments 2 to 4 and the assembly tables of the embodiments 5 and 6. The communication unit of the invention addresses the communication units on the side of target of the second to sixth embodiments and the communication units on the side of target in variants of the second to sixth embodiments.

A method of solving variables according to the invention is a method of solving variables in a programmable controller provided with a controller that operates and executes a programmed program and a communication unit that communicates with other communication units through a network, wherein the controller has a variable table that associates and stores real addresses of a memory where data is stored and variable names corresponding to the data, the communication unit has a communication establishment process means that received a communication establishment request for identifying variable names targeted for communications from other communication units, and a table that associates and stores the variable names targeted for communications and buffer areas, the the communication unit makes an inquiry to the controller about the real address associated with the variable name included in the communication establishment request when it receives the communication establishment request for identifying the variable name targeted for communications from the other communication units, in response to the inquiry the controller refers to the variable table and sends back the real address associated with the variable name, and the communication unit creates and stores a table that associates the returned real address with the variable name targeted for communications. This method allows the communication unit to reliably obtain a real address associated with a variable name from the CPU unit. Since it receives information directly from the CPU unit, the communication unit can always receive correct information and is immune from acquisition of incorrect information. The method of solving variables is executed in the communication units on the side of target in variants of the second to sixth embodiments.

A controller system according to the invention is comprised of a controller system to which a plurality of programmable controllers are connected through a network, the plurality of programmable controllers include at least one each of the programmable controllers on the side of originator and of target, respectively, and data transmission and reception among the plurality of programmable controllers are carried out by using the identification information and specifying the data.

A controller system according to the invention is a controller system to which a plurality of programmable controllers on the side of originator and those on the side of target are connected through a network, wherein communication setup information about a target of communication is stored in either one of the communication unit on the sending side of the communication target or on the receiving side, the communication setup information to be stored is the information that associates the variable name of a local station targeted for the communications, variable names of a distant office, information for distinguishing transmission/reception, and address information that specifies the distant office of communications, the communication unit provided with the communication setup information has the capability of issuing a communication establishment request together with at least variable name of the distant office, the communication unit without the communication setup information has the capability of determining whether or not to permit a request for the communication setup request, and has the capability of issuing enabling acknowledgement together with a connection ID to be used in communications if the request is permitted, and it is configured that communications between the communication units are established by using the connection ID and specifying a communication action.

In addition, the connection ID is set in a group that groups a plurality of communication targets having same communication conditions, and use of the connection ID can also have the configuration that enables more than one communication target altogether.

In any controller system mentioned above, communication is established in order to transmit and receive data between programmable controllers of each other, and both of them can share data. When the communication is established, as the communication unit has information on association between the variable name and real address, processing capacity of the communication unit expands, and thus load on CPU unit can be reduced.

In this invention, communications can be set up by using variable names to a communication unit, when advance communication setup for communications between programmable controllers is done. A communication unit can reliably and accurately obtain information on variable names from CPU unit. In addition, when communications is established between the programmable controllers, processing capacity of the communication unit expands, and thus load on the CPU unit can be reduced.

### BRIEF DESCRIPTION OF THE DRAWINGS

Fig. 1 shows an example of a network system to which this invention is applied.
Fig. 2 shows internal structure of a controller (CPU unit) and communication unit in a first embodiment of the invention.
Fig. 3 illustrates the principle of operation of the first embodiment of the invention.
Fig. 4 is a sequence diagram between the controller (CPU unit) and communication unit.
Fig. 5 shows another embodiment.
Fig. 6 shows an example of the input screen of communication setup tool.
Fig. 7 shows an example of the input screen of the communication setup tool.
Fig. 8 illustrates the principle of operation of a second embodiment of the invention.
Fig. 9 shows an example of the data structure of a connection table to be created by the second embodiment of the invention.
Fig. 10 illustrates the principle of operation of a variant of the second embodiment of the invention.
Fig. 11 illustrates the principle of operation of a third embodiment of the invention.
Fig. 12 illustrates the principle of operation of the third embodiment of the invention.
Fig. 13 shows an example of the data structure of a connection table to be created by the third embodiment of the invention.
Fig. 14 shows an example of the data structure of a connection table to be created by the third embodiment of the invention.
Fig. 15 illustrates the principle of operation of the variant of the third embodiment of the invention.
Fig. 16 illustrates the principle of operation of the variant of the third embodiment of the invention.
Fig. 17 illustrates the principle of operation of a fourth embodiment of the invention.
Fig. 18 illustrates the principle of operation of the fourth embodiment of the invention.
Fig. 19 shows an example of the data structure of a connection table to be created by the fourth embodiment of the invention.
Fig. 20 illustrates the principle of operation of the variant of the fourth embodiment of the invention.
Fig. 21 illustrates the principle of operation of the variant of the fourth embodiment of the invention.
Fig. 22 illustrates the principle of operation of a fifth embodiment of the invention.
Fig. 23 shows an example of the data structure of a connection table to be created by the fifth embodiment of the invention.
Fig. 24 illustrates the principle of operation of the variant of the fifth embodiment of the invention.
Fig. 25 illustrates the principle of operation of a sixth embodiment of the invention.
Fig. 26 shows an example of the data structure of a connection table to be created by the sixth embodiment of the invention.

### DESCRIPTION OF THE PREFERRED EMBODIMENTS

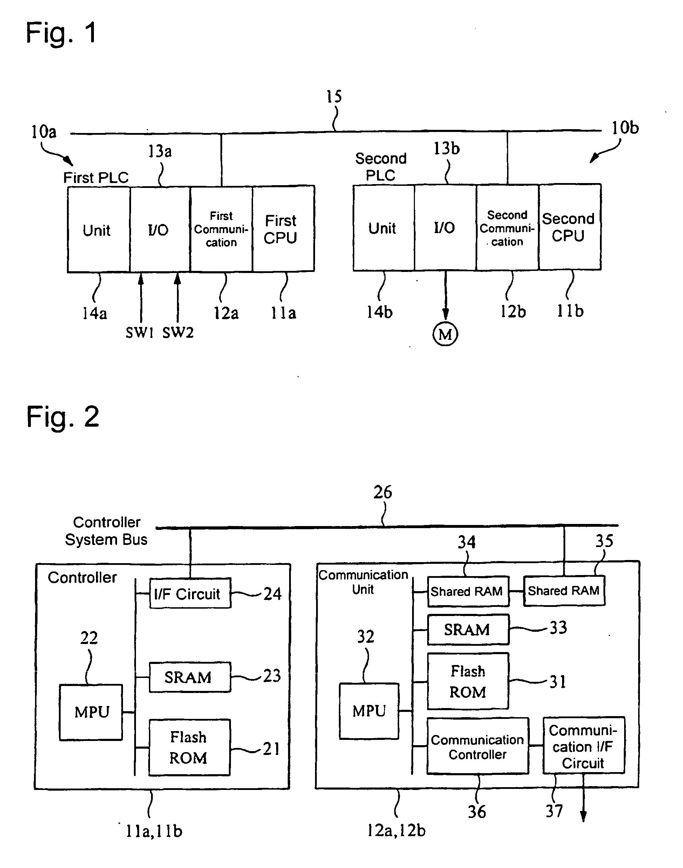

Fig. 1 shows an example of a network system to be constructed by a programmable controller according to the invention. The example illustrates a distributed control system constructed by 2 PLCs. In other words, a first PLC 10a and second PLC 10b are connected by way of the network 15.

In the example shown in Fig. 1, the first PLC 10a comprises a first CPU unit that operates and executes a user program, and cyclically executes I/O refresh or peripheral processes, a first communication unit 12a that establishes communications with other nodes, I/O units 13a that connect input/output devices, other units 14a, etc. These units are connected by way of a system bus. Other units 14a include a power supply unit that supplies power to respective units, master unit for conducting master-slave communications, etc., for example. In addition, more than one unit of same kind may be linked. Additionally, a second PLC 10a? comprises a second CPU unit 11b that operates and executes a user program, and cyclically executes I/O refresh or peripheral processes, second communication unit 12b that establishes communications with other notes, I/O units 13b that connect input/output devices, other units 14b, etc. The other units 14b include a power supply unit that supplies power to respective units or master-slave unit for conducting communications, etc., for example. In addition, more than one unit of same kind may be linked. Although in Fig.1, both of the first PLC 10a and second PLC 10b are formed by linking 4 units, the number of units comprising each PLC is not always same and units to be linked may increase or decrease as necessary.

In this system, action of a motor M connected to the second PLC 10b is controlled according to input signals from first and second switches SW1 and SW2 connected to the first PLC 10a. In other words, the motor M rotates and is driven when the first SW1 turns ON, and stops when the second switch 2 turns ON. Here, the second CPU unit 11b of the second PLC 10b requests the first PLC 10a (the first CPU unit 11a) to read out IO information (ON/OFF data) in the first and second switches SW1 and SW2, and obtains the IO information by means of a response from the first PLC 10a and controls action of the motor M.

Fig. 2 shows internal structure of the first and second CPU units 11a, 11b, and that of the first and second communication units 12a, 12b. Each unit of them is involved in processes for transmitting and receiving data between the first PLC 10a and second PLC 10b. Since hardware configuration of each CPU unit 11a, 11b is identical, one is shown as a representative.

The first CPU unit 11a and second CPU unit 11b are what are called controllers. Both of the first and second CPU units 11a, 11b comprise a flash ROM 21 that can be a nonvolatile memory means of storing a user program, MPU 22 that executes the user program, SRAM 23 that can be volatile memory means for being used as a working memory while the MPU 22 executes an arithmetic operation and for storing IO information, and interface circuit 24 that communicates with other units. A main firmware program or various parameters (setup information) are contained in the flash ROM 21. Also, the interface circuit is connected to a system bus 26.

The first and second communication units 12a, 12b is connected to a flash ROM 31 that can be a nonvolatile memory means in which various types of programs or parameters, etc. are stored, MPU 32 that executes a program stored in the flash ROM 31, SRAM 33 that can be a volatile memory means, shared RAM 34 for supplying data to corresponding CPU unit, and the system bus 26, and comprises an interface circuit 35 that conducts communications with other units, communication controller 36 that actually transmits/receives data to/from other notes connected to the network 15, and communication interface circuit 37 connected to the network 15.

Here in the invention, both of the first and second CPU units 11a, 11a are designed to be able to execute a user program programmed by variable names (sometimes referred to as Tag, or a logical name) that are labels set by focusing on functions, and to access with the variable names (Tag). Cyclic communications to the first and second communication units 12a, 12b connected to the first and second CPU units 11a, 11b is designed to be conducted by using a connection ID, to be discussed later.

In this embodiment, in order to enable cyclic communications with the connection ID, not only the first and second CPU units 11a, 11b have a table of variables that associates variable names (Tag) with real addresses (local physical addresses in the PLCs), but also communication setup information on which data corresponding to which variable name is subject to the cyclic communications is registered in the first and second communication units 12a, 12b. A user generates the table of variables or communication setup information by using communication setup tool 30, and stores it in each unit. In addition, when the system starts up, the first and second communication units 12a, 12b independently solves a relationship between the variable names and real addresses by making an inquiry to the CPU unit (controller) about the real address of the registered variable name, and internally retains it as the table.

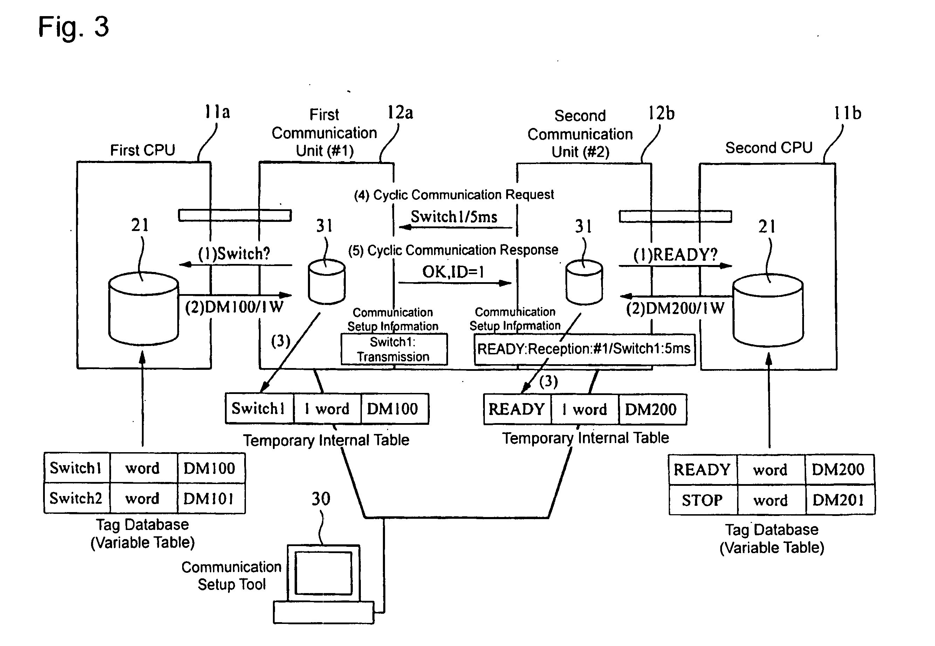

We describe specific process functions for executing the above processes, with reference to the figures from Fig. 3 onward. As shown in Fig. 3, the first and second CPU units 11a, 11b store and retain the table of variables that associates the variable names, data kind (type), and real addresses. This table of variables is stored in the flash ROM 21. In addition, data specified by the real address is stored in the SRAM 23.

In the case of Fig. 3, the first CPU unit 11a comprises the table of variables in which the variable names (Switch1, 2) that specify 2 switches, respectively, and the real addresses (DM100, DM101) that store 10 data indicating ON/OFF of the 2 switches are associated. The second CPU unit 11b comprises the table of variables in which the variable names that signify driving (READY) and stopping (STOP) of the motor M and the real addresses (DM200, DM201) that store data corresponding to the variable names are associated. Finally, data stored in a memory area of DM 100 of the first CPU unit 11a is stored in a memory area of DM200 of the second CPU unit 11b. Finally, data stored in a memory area of DM101 of the first CPU unit 11a is stored in a memory area of DM201 of the second CPU unit 11b. The second CPU unit 11b controls action of the motor M based on the data storing the real address in memory areas of DM200, DM201.

The first and second communication units 12a, 12b comprises communication setup information that specifies by their own units which data of which variable name is to be subj ect to cyclic communications. The communication setup information is stored in the flash ROM 31. The communication setup information has a table structure that associates variable names that specify data to be subject of the cyclic communications with type information that discriminates transmission/reception. In addition, for received data, it shall have a data structure that associates a node address of a sender where the received data is stored, a variable name to be used in the node, and interval of reception.

To be specific, communication setup information that is stored in the first communication unit 12a whose node address is #1 shall have the variable name "Switch1" and transmission/reception type of "transmission". This means that the first communication unit? sends data whose variable name corresponds to Switch1 when it receives the cyclic communications from other nodes. Similarly, communication setup information that is stored in the second communication unit 12b whose node address is #2 is used in the second CPU unit 11b connected to the second communication unit 12b, and shall have the variable name "READY" and transmission/reception type of "reception". The "READY" is received data, and data corresponding to the "READY" is data having the variable name "Switch1" stored in the second CPU unit 11a. Thus, the communication setup information stored in the second communication unit 12b comprises data that associates the node address (#1) of the first CPU unit (the first PLC 10a) in which the data corresponding to "READY" is stored, the variable name "Switch1" in the first CPU unit 1a, and reception interval (5ms) , in addition to "READY" and "reception" described above. The communication setup information stored in the second communication unit 12a means that "not only the data whose variable name is set to be "READY" in the second CPU unit 11b to which self?? is connected is stored in the node address (#1) with the variable name "Switch1", but also that the second CPU unit 11b wishes to collect that data at intervals of 5ms".

In addition, although the second communication unit 11b, as communication setup information to store and retain, has information on other nodes such as the address (#1) of the node of the sender where necessary data to be received is stored and retained and the variable name (Switch1) in that node, the information on other nodes is set from the communication setup tool 30. In other words, the communication setup tool 30 also registers the communication setup information to the first communication unit 12a. In addition, since a user who manipulates the communication setup tool 30 knows that data of the variable name "READY" to be used in the first CPU unit 11a is identical to that of the variable name "Switch1" to be used in the first CPU unit 1a, he/she can register by associating the node address, etc. of the first communication unit 12a, when registering in the second communication unit 12b. We will describe the setup process using the communication setup tool 30 later.

Then, MPU 32 for each communication unit 12a, 12b generates a temporary internal table based on the communication setup information stored in each of its own flash ROM 31, and the table of variables stored in the first and second CPU units, and stores the temporary internal table in the SRAM 33 that is a volatile memory. The temporary internal table is the table that associates variable names used in each of connected CPU units 11a, 11b, data type of the data corresponding to the variable names, and real addresses of the CPU unit that should record the data of the variable names.

In addition, although in the example shown in Fig. 3, we describe the communication setup information and temporary internal tables whose variable names are "Switch 1" and "READY" , needless to say, the communication setup information and temporary internal tables with variable names "Switch2" and "STOP" may also be set.

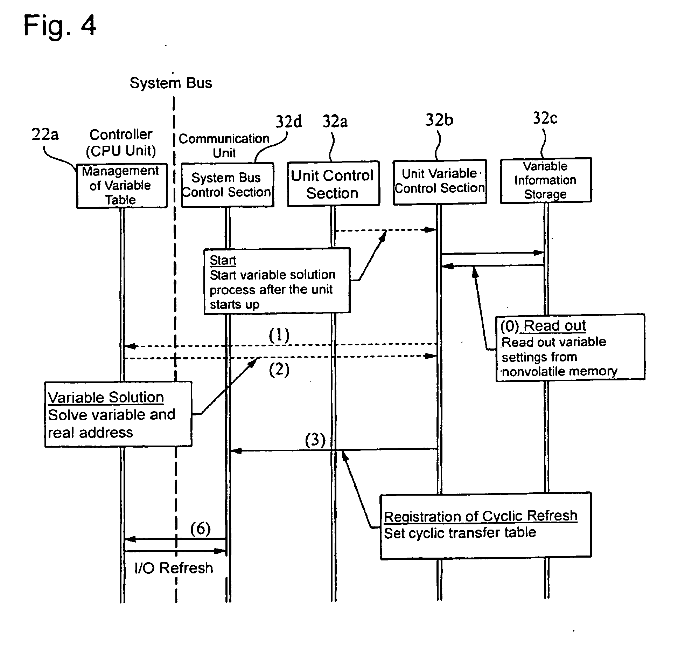

Next, with reference to Fig.3 and Fig. 4, we specifically describe process procedures/functions of a name solution (tying of a variable and real address) that is mainly carried out by respective communication units. First, independent of each other, respective communication units 12a, 12b carry out variable solution (solution of a variable name and real address) asynchronously. In other words, when a unit control section 321 in MUP 32 recognizes that the condition for variable solution such as startup of a unit, etc. is met, respective communication units 12a, 12b initiate the variable solution process.

(0) Then, following this, a unit variable control section 32b in the MPU 32 reads out communication setup information through a variable information storage processor 32c that has been stored in the flash ROM 31 by the communication setup tool in advance.

Next, the variable solution process is carried out based on the read communication setup information. In other words, (1) the unit variable control section 32b extracts a variable name from the read communication setup information, and transmits a solution request message to the CPU unit on the same system bus 26. In fact, it transmits by way of the system bus 26 a message requesting a real address in which data of a variable name (for instance "READY" or "Switch1") is stored.

(2) The variable table control section 22a (incorporated as one of functions of MPU 22) of the CPU unit that has received the solution request searches in a local variable table it retains, looks for a same variable name as the received variable name, reads out physical address information (real address) /information of variable size (variable type) , adds the information to a response to the request, and sends back it as a message. From the returned message, respective communication units can learn the real address in SRAM 23 of the CPU 7nit in which the variable for which solution request was made is registered.

(3) Upon receipt of the the returned message, respective communication units generate temporary internal tables and stores them in SRAM 23. In fact, they generates tables that associate the variable names of the variables retained by themselves with the received real address and size information, and store the tables as temporary internal tables in SRAM 33. Although it is after the return message is received that they finally generate the table s, they may create in advance tables having a blank real address column, etc. in which area the real address, etc. will be stored when it is received.

(4) Then, respective communication units search for communication information setup, search for a variable having the "reception" attribute, and transmit a cyclic communication request based on added information of the variable, if it exists. In the example of Fig. 3, a variable of "READY" exists in the second communication unit 12b (#2), and we can see that it has the "reception" attribute. In addition, in the added information of the variable "READY" it is written that "it wishes to receive the variable "Switch1" of the controller connected to the communication unit #1 at the cycle of 5ms." Hence, the second communication unit 12b (#2) transmits the cyclic communication request of "Variable :Switch1/5ms" to the first communication unit 12a (#1).

(5) Receiving the cyclic communication request, the first communication unit 12a checks whether the requested variable exists in a temporary internal table of its own unit. If it does, the unit sends back a normal response with cyclic communications ID (connection ID: ID=1 in this example) added.

(6) Simultaneously, in order to exchange (I/O refresh) memory information with the local CPU unit, the communication unit that has received the request uses a "solved real address" stored in the temporary internal table, as I/O refresh information on the system bus. In fact, the system bus control section 32d sets in the cyclic refresh transfer table (connection table: not shown in this example) of the shared RAM 34. Then, the data structure of the cyclic refresh transfer table takes the form of the table that associates the cyclic communication ID (connection ID) , real address, and a data area into which real data to be subject of the cyclic reception is written, and the data obtained from the cyclic communications will be written into the data area. This completes solution of the variable.

Subsequently, a newest value of Switch1 is transmitted from the first communication unit 12a to the second communication unit 12b at the cycle of 5ms. In addition, the first communication unit 12a conducts the transmission independently or by sending back as a response to the request from the second communication unit 12b.

Then, a packet to be transmitted between the first communication unit 12a and the second communication unit 12b is added the cyclic communication ID=1. The respective communication units 12a, 12b are provided with a cyclic refresh transfer table that associates the cyclic communication ID, real address of SRAM of the CPU unit in which data to be transmitted/received together with the ID is stored, and buffer memory area into which the data to be transmitted/received is temporarily stored. The second communication unit 12b then writes the received newest value into a corresponding data area in the cyclic refresh transfer table, based on the cyclic communication ID stored in the received packet. In addition, the writing into the data area may be implemented either by directly storing data received from the cyclic communications into cyclic refresh transfer data or by once storing it into SRAM 33 and transferring the data stored in the SRAM 33 later.

The second CPU unit 11b accesses to the shared RAM by IO refresh, obtains the data stored in the cyclic refresh transfer table, and stores it in its own SRAM 23 specified by the corresponding real address.

Thus, in the communications between nodes after solution of variables is conducted, data is transmitted/received with the cyclic communications ID (connection ID) uniquely existing on the network as a key. Data transmission/reception in the local space between the CPU unit and communication unit is processed in accordance with a cyclic refresh transfer table that associates a cyclic communications ID provided in a communication unit of each node with a real address to be stored in a CPU unit. This allows respective PLCs to transmit and receive data without knowing a real address where data to be stored/received that is used in a counterpart node that transmits/receives is stored.

Now, if a change has been made to allocation of variables on the side of CPU unit due to online editing, etc., the variable table control section notifies the communication units of "request for change". The communication unit performs the variable solution process based on the notice, and updates the temporary internal table. This could enable execution of the process without change, in spite of the allocation of variables.

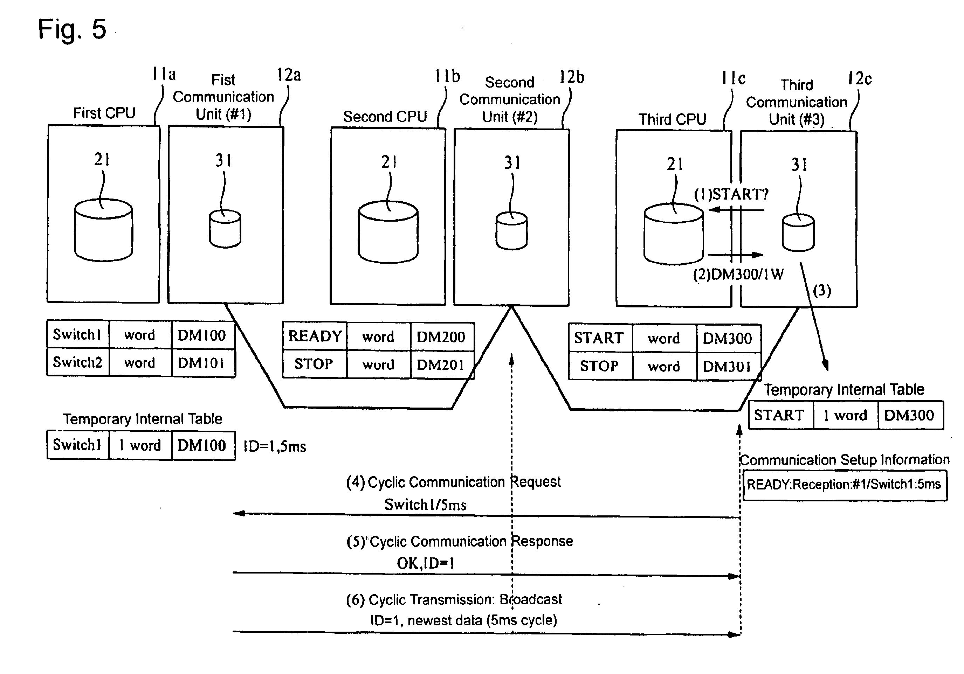

In addition, although the above mentioned embodiment shows the example in which the 2 PLC 10a, 10b comprise the network, the invention is not limited to this configuration, solution of variables may be conducted by following the similar procedure even when more than 2 PLCs are involved, and data for cyclic communications can be transmitted and received, together with the cyclic communication ID, as with the case mentioned above (Refer to Fig. 5).

Additionally, if same data is to be received by more than one node, the identical cycle of cyclic communications should be set. There would be no problem even when there exists more than one node that uses the same data, if communication setup information could be simultaneously set to the plurality of nodes by using the communication setup tool 30. In addition, when a new PLC is added, for instance, basically, any data that is set as received data in the newly added PLC shall be used, if the data has already been set in the communication setup information of other PLCs.

Now, as an example, we describe a case in which a 3^{rd} PLC joins a network in which 2 PLCs are already operational. Said situation may take place when communication setup of PLC 3 is done separately afterwards because its startup is delayed.

First, the processes of (1) to (4) described above are executed, and a cyclic communication request is transmitted for a variable having the "reception" attribute in the communication setup information. Since the communication unit that stores data of the variable having the above mentioned "reception" attribute receives the request, it performs the following processes:

(5) ' The communication unit (the first communication unit 12a in the example of the figure) that has received the cyclic communication request analyzes the received request (in the case shown, the request from the third communication unit 12c that has been added) and reviews whether the requested variable is servicing to other units. In other words, to be specific, it refers to the temporary internal table, and checks whether Switch1 exists. As Switch 1 exists, it then compares its service cycle with the requested value. In this example, because they are 5ms and same, it determines that the process being serviced to the second communication unit (#2) 12b can be shared, and reads out its ID, and responses to the third communication unit #3 that requested for transmission with ID=1.

(6) Subsequently, the first communication unit 12a (#1) broadcasts (does not specify the receiving unit number) a newest value of Switch 1 as ID-1 at the cycle of 5ms. Each communication unit checks ID No. when it receives the broadcast, and determines whether it matches the ID that it requested and turned out to be OK. If they match, the communication unit incorporates them into the unit and executes the similar processes mentioned above.

In addition, if requested cyclic communication duration differs, the first unit 12a will respond to the third communication unit 12c after generating a new cyclic communication ID (for instance, ID=2), and will then transmit as ID=2 with the requested cycle, independent of transmission of ID=1. To cite a case, for instance, although the third communication unit 12c (#3) requests the first communication unit 12a for Switch 1, the communication setup of the former will be START:Reception:#1/Switch 1:7ms when the cyclic communications duration is 7ms. Then, although Switch1 is already being serviced, since the requested cycle differs, the first communication unit generates a new ID (ID=2, etc.), responds to the third communication unit 12c, and then sends as ID=2 at the cycle of 7ms, independent of transmission of ID=1. By thus changing IDs, same data can even be cyclically communicated at the cycle suitable to each communication unit.

In addition, the invention may implement the following processes. In other words, in many control systems, it is often more convenient if data is updated faster. Thus, if the requested cycle of cyclic communications is greater than the cycle that has already been serviced, the process of sharing with the shortest cycle will be possible. Then, as not only transmission process by the first communication unit 12a can be made more efficient, but also utilization efficiency of communication circuits will increase, the overall system may often benefit.

Then, in the above mentioned process (5) ' , if the cyclic cycle is different although the requested variable can be shared, the cycles are compared. If the cycle of existing service is shorter, the cycle that can be serviced is added as a response of "OK, ID=1, 5ms". Subsequently, newest values will be transmitted to 2 units, namely, the second and third communication units, with ID=1 and at the cycle of 5ms.

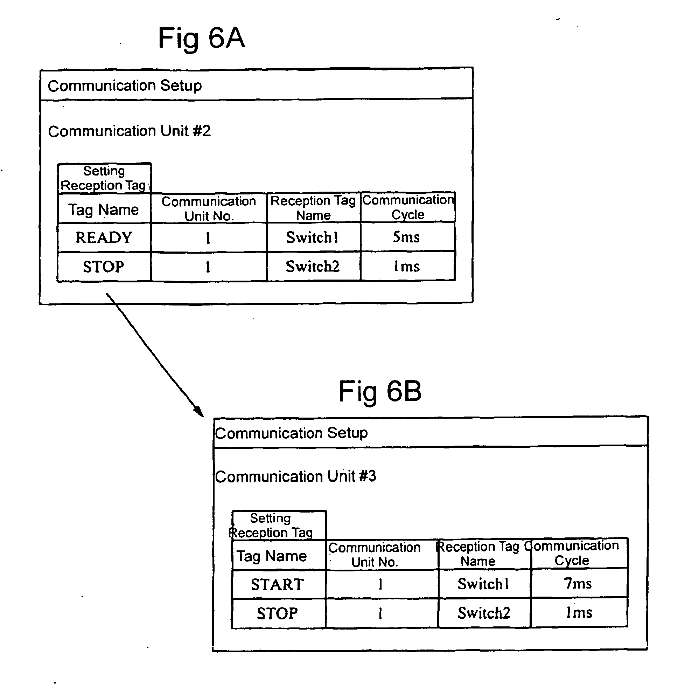

Now we describe the setup process by means of the communication setup tool 30. As a prerequisite for conducting the above-mentioned variable solution, it is necessary that the communication setup unit 30 is used to store communication setup information to respective communication units. As shown in Fig. 6A, 6B, in the setup process, the input screen in the form of the table similar to the communication setup information table is output and displayed on the display screen of the communication setup tool 30. Then, a user enters desired data in blank columns in that table (The figure shows the condition after book data is entered). After the user confirms the entered data, he/she downloads the data to respective communication units through the network. This could store the data? in the flash ROMs of the communication units.

Although it is not shown in the figure, the input screen similar to the above may be prepared and downloaded to the communication units on the sending side, or the communication unit No. (node address) and received Tag name on the screen of the setup example of the communication setup tool 30 on the receiving side may be extracted, from which the communication setup information of the communication units on the sending side may be generated and registered.

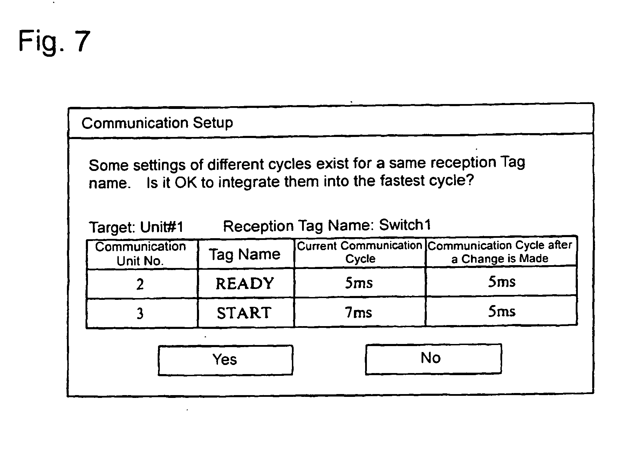

In addition, the communication setup tool 30 has the following functions in order to cope with a case in which different communication cycles are specified to same data. In fact, for instance, when content of communication setup of the receiving communication unit #3 is entered, the tool searches already entered communication units for any communication unit that has same communication unit NO. and received Tag name. If a same entry exists, the tool compares the communication cycles. If there exists setup with a different cycle, it displays them on the Tool screen, and requests the person who set to confirm it. In that case, as shown in Fig. 7, it displays a message prompting for adjustment to the fastest cycle.

As described above, in this embodiment, as for communication setup information, information on which variable name is to be subject of communications (cyclic communications, etc.) between other nodes is registered in a communication unit, and the communication unit independently solves a real address (local physical address within the programmable controller) of the variable registered in the communication setup information by making an inquiry about it to the controller with predetermined timing such as when system starts up, etc., and internally retains it as a table. This would enable handing of data between the communication unit and controller. In other words, in systems having different real addresses and same variable names, the communication setup information?? does not change often. Thus, as it is less likely that a change is made on the side of the controller after setting in the communication unit, there will be no need for resetting the variable name once the communication setup information is registered in the communication unit.

In addition, if the communication units share identification information (communication ID in the embodiment) that identifies data to transmit among other nodes that establish communications, and data communication is conducted by adding the identification information, transmission/reception of data can be implemented between the communication units.

Then, since the communication units know the identification information for transmitting and receiving data to/from other communication units and the storage area (real address) of the data to be identified by the identification information in the controller to which it is connected, the communication units are aware of the relationship and can hand the data with the controller, thereby sharing the same data with the controller (programmable controller).

Thus, since the communication units manage association of the variable names and communications, the controller is no longer requested to manage, and load will be distributed. Even when there are more than one communication unit involved, the controller does not. have to increase requested resources since each communication unit performs the management. Thus, as the communication capability (data volume, number of nodes, etc.) does not rely on the controller, the capability will be enhanced if the number of units is increased.

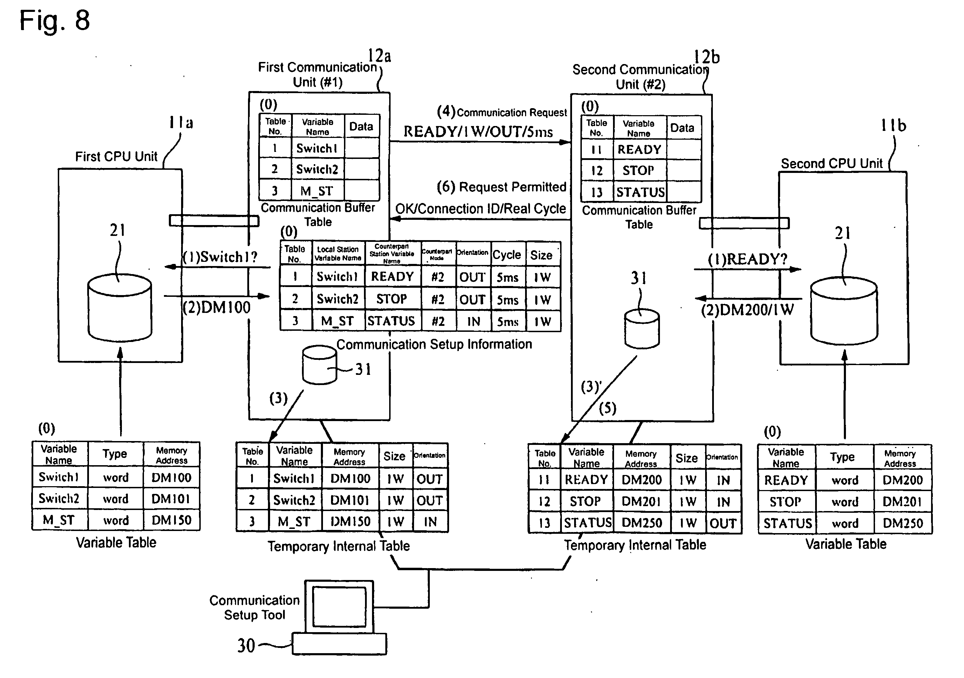

Fig. 8 shows a second embodiment of the invention. In the above-mentioned first embodiment, the communication setup tool 30 is used to set communication setup information respectively to each communication unit, name solution between the communication units and CPU unit 11 is carried out based on the information, and the cyclic communications ID (connection ID) is finally set. In fact, each communication unit is provided with communication setup information on variable names for which name resolution is done with the CPU unit it is connected to. In other words, the above-mentioned first embodiment shows the example in which in order to implement data transmission and reception between PLCs, the communication setup information for transmission is stored in the communication unit of the sending PLC, while the communication setup information for reception is stored in the communication of the receiving PLC. In fact, the communication setup information to be used in deciding one connection ID is divided into the sending side and receiving side, which is then stored in respective units.

In contrast to this, in this embodiment, communication setup information involved in setting one connection ID is stored in only one of communication units. In the communication units that communicate with each other, the communication setup information for both transmission and reception is stored in one of the communication units. In the example shown in Fig. 8, the communication setup information is stored in the first communication unit 12a with the node address of #1. This unit that stores the communication setup information shall be an originator, and the unit that does not store the communication setup information shall be referred to as a target. In addition, both of the first and second CPU units 11a, 11b are provided with a variable table. The variable table is a table that associates the variable names used in the program created by the user, data types corresponding to the variable names, and memory addresses where the data is stored. The variable table is similar to that of the first embodiment. In this embodiment, however, information on status of the motor M connected to the second CPU unit 10b is also managed. The status shows 2 conditions of the motor being run and stopped, for instance.

Against this backdrop, the second CPU unit 11b that constitutes the second PLC 10b to which the motor M is connected comprises the variable table that associates the variable name meaning the status of the motor M being "STATUS" , the type being "word", and the memory address storing the status of the motor M being "DM250". Needless to say, as with the first embodiment, "READY" and "STOP" are also stored in the variable table, and what are meant by these 2 variable names is similar to the first embodiment.

In addition, the first CPU unit 11a that constitutes PLC10a monitors status of the motor M. In line with this, data related to the variable name "M_ST" for entering the status of the motor is described in the variable table of the first CPU unit 11a, in addition to the variable names "Switch1" and "Switch2".

Furthermore, the first communication unit 12a is provided with a communication buffer table for temporarily storing data to be transmitted/received to/from other communication units. Similarly, the second communication unit 12b is provided with the communication buffer table. The communication buffer table is such structured that the table number, variable name, and area in which data to be transmitted/received is stored are associated. The communication buffer table is stored in the shared RAM 34, for example. In actual operation, the communication buffer table is used for data communications between communication units of different PLCs, as well as for data transfer between the communication unit in the same PLC and CPU unit. Information stored in the communication buffer table is backed up in a nonvolatile memory in the communication units. The MPU 32 of the communication units read out the information that was backed up, from the nonvolatile memory with predetermined timing, such as when power is turned on, and stores it in the shared RAM 34.

In the following, we describe functions of respective units while providing an explanation of name solution to be carried out between the connected CPU unit and communication units and the process steps in determining a connection ID to be used for actual data transmission/reception between the communication units.

(0) First, manipulating the communication setup tool 30, a user generates a variable table to be stored in a first CPU unit 11a, and downloads the created variable table to the first CPU unit 11a. Similarly, manipulating the communication setup tool 30, the user creates a variable table to be stored in a second CPU unit 11b, and downloads the created variable table to the second CPU unit 11b.

In addition, manipulating the communication tool 30, the user generates a communication buffer table to be stored in the first communication unit 12a, and downloads the generated communication buffer table to the first communication unit 12a. Similarly, manipulating the communication setup tool 30, the user creates a communication buffer table to be stored in the second communication unit 12b, and downloads the created communication buffer table to the second communication unit 12b.

Using programming tool (as hardware, it may be a personal computer that is same as the communication setup tool 30 or it may be different), the user creates a user program to be executed by each CPU unit. The user program created with the tool 30 is compiled when it is downloaded to the CPU units. When it is compiled, variable names used in the program are converted into real addresses, and thus the CPU units execute the user program described with the real addresses. In addition, since the user determines variables to be used in the user program by corresponding them to data (including meaning of contacts) to be used in PLC control, he/she is aware of information on correspondence between variables (variable names) and data (including meaning of contacts) in each CPU unit. The user is also aware of the information on the data (including meaning of contacts) and storage areas of the memory of the data in the CPU unit (real addresses) . In addition, when transmitting and receiving data between PLCs, the user knows which data stored in which CPU unit should be sent to which different CPU unit. Furthermore, the user knows which variable name the data to be transmitted/received between PLCs corresponds to in the sending and receiving CPU units. Thus, based on the information, the user can create a variable table to download to each CPU unit, or a communication buffer table to download to each communication unit.

In addition, manipulating the communication setup tool 30, the user generates communication setup information for one of the communication units (in this example, the first communication unit 11a (on the side of originator)), and stores it in the first communication unit 12a (#1). The communication setup information to be generated here is a table that associates the variable name to be used in a local station, variable name to be used in a counterpart station, node address of the other end of communication, direction of the communication, cycle of data transmission/reception, and data size.

(1) Downloading of the variable table and communication buffer table to respective units enables respective communication units 12a, 12b to execute a name solution process. For instance, triggered by resetting, the communication units execute the name solution. To be specific, when reset, each communication unit 12a, 12b makes inquiries to the CPU unit to which it is connected about what a real address in which data corresponding to a variable name is stored is, based on the variable name stored in the communication buffer table, for instance, irrespective of whether it is the originator or target. In fact, for instance, the first communication unit 12a makes an inquiry to the first CPU unit 11a about a real address of the memory in which data having the variable name of "Switch 1" is stored.

(2) The first CPU unit 11a not only accesses to the variable table with the inquired variable name as a key and obtains a corresponding real address (DM100), but also sends back the obtained real address, as a response to the inquiry, to the first communication unit 12a. Similarly, the first communication unit 12a makes inquiries about real addresses corresponding to "Switch2" and "M_ST" and obtains the corresponding real addresses as a response from the first CPU unit.

In addition, although in the illustrated example, the inquiries are made one by one, they may be made together. Although the illustration is omitted here, when the real address is sent back, data size (type) may be also sent back. This also applies to other embodiments and variants.

Similarly, the second communication unit 12b makes inquiries to the second CPU unit 11b about real addresses of the memory in which data corresponding to the variable names "READY", "STOP", and "STATUS" is stored. Then, the second CPU unit 11b accesses to the variable table with the inquired variable names as a key, not only obtains the corresponding real address, and type (size) but also sends back the obtained real address and type (size) to the second communication unit 12b. In Fig. 8, the second communication unit 12b makes inquiries about name solution for "READY" , and the second CPU unit returns "DM200/IW".

In addition, the timing of executing the name solution process is not limited to one based on the above-mentioned resetting, but can be set freely and created if at least the communication buffer table and variable table are stored. This also applies to other embodiments and variants.

Briefly describing the information on real addresses and data size obtained by respective communication units, the real address is information that the communication unit needs for data exchange with the CPU unit when it is communicated between the communication units after communication is established, and the information is used on both of originator and target. The data size is the necessary information when the originator side makes a request for establishment of communications or the target side executes the communication establishment process, if communication is established. This also applies to other embodiments and variants.

In addition, in the second embodiment, the communication unit 12a on the side of originator stores information on the variable names to be communicated in the local station with all of it contained in the communication setup information. Therefore, when the first communication unit 12a on the side of originator executes the name solution process, it can do so based on the variable name included in the communication setup information, rather than based on the variable name stored in the communication buffer table, as described above. In other words, the first communication unit 12a makes inquiries to the first CPU unit 11a about the real addresses corresponding to the variable names of "Switch1", "Switch2", and "M_ST", respectively, included in the communication setup information, and obtains the real addresses corresponding to respective variable names. Needless to say, information on data size may be obtained simultaneously, as necessary.

(3) The first communication unit 12a stores the information that the name is solved. For instance, the temporary internal table can be used as a storage area. In addition, on the side of originator provided with the communication setup information, even "direction" is identified in the communication setup information, and thus the temporary internal table is complete, as shown in Fig. 8. The temporary internal table is the table that associates the communication buffer table number, variable name, real address, data size, and direction (IN/OUT) . This ends the name solution. In addition, since the data size can also be stored in the communication setup information, data to be stored in the size column of the temporary internal table is to be obtained from the size column of the communication setup information. However, the invention is not limited to this, and as the data type (size) is added together with the real address to be returned from the first CPU unit 11a, data size of the temporary internal table can be created by using the data in the variable table stored in the first CPU unit. In addition, when creating the communication setup information, the user may create by using the data in the variable table rather than writing the data size. This also applies to other embodiments and variants.

(3)' The second communication unit 12b stores the information that the name is solved. For instance, the temporary internal table can be used as a storage area. As the second communication unit 12b on the side of target does not have the communication setup information, distinction of the direction of data transmission (transmission: OUT, reception: IN), etc. is unknown. However, since from the information stored in the communication buffer table, the second communication unit 12b is aware of the variable name of the local station of the data communicating with the first communication unit 12a, it can recognize association between the variable name and real address by making an inquiry to the second CPU unit 11b about the real address of the variable name. Therefore, executing processes (1) and (2) for all the variable names stored in the communication buffer table, the second communication unit 12b can associate the communication buffer table number, variable names, real addresses and size (to be set based on a type), and stores the associated data in the temporary internal table. This would create a temporary internal table with direction of communications being blank. In addition, Fig. 8 shows the condition of the temporary internal table that will be finally created by executing all the processes discussed later and that also stores "direction" . Execution of the processes in the (3)' ends the name solution on the side of the second communication unit 12b as well.

(4) Next, we describe the connection ID setup process steps. In the ascending order of its node numbers, the originators sequentially make a request for establishment of communication to the target. Based on the fact that the tool 30 has issued the command to establish communication, each communication unit shall sequentially issue a request for establishment of communication to its counterpart communication unit. The request for establishment of communication transmits information on a variable name of counterpart station, data size, direction and cycle to the counterpart node. It may also include a variable name of the local station. Needless to say, as the frame header of the request for establishment of communications stores the node address of the local station (#1) and that of the counterpart station (#2) as sender information, the communication unit that received the information will know from which communication unit at which node address the request for establishment of communication has been sent. In addition, the request for establishment of communications is made in terms of setting of the connection ID. Thus, in this embodiment, as a connection ID is set for every variable name, one process is executed for every variable name.

In the example of Fig. 8, the first communication unit 12a at the node address #1 first issues to the second communication unit 12b a request for establishment of communications of "READY/1W/OUT/5ms".

(5) A target that received the request for establishment of communications checks the request. In fact, it accesses to the temporary internal table, and checks whether or not there is the variable name for which the request for establishment of communications is made. If there exists the variable name, the target then checks whether the size matches. If it does, it stores a direction opposite to the "direction information" sent together with the request for establishment of communications in the temporary internal table. Thus, if the second communication unit 12b that has received the above request for establishment of communications authorizes that the request is correct, the second communication unit 12b enters "IN" in the column "direction" that has been blank and corresponds to READY in the temporary internal table.

Although presence or absence of a variable name may be checked, based on the temporary internal table, as described above, the invention is not limited to this, and the check may also be made based on the communication buffer table. Furthermore, it would be also acceptable if presence or absence of a variable name were double-checked based on both the temporary internal table and communication buffer table.

(6) In addition, the target compares the real cycle with the requested cycle and checks whether it is possible to correspond to. If it is, the target identifies a connection ID, and displays "Requested condition is OK" and "Content of communication establishment" on the monitor screen of the display of the communication setup tool. Then, the real cycle may even be sent simultaneously. Since the real cycle on the side of the target is stored in its system memory, the target shall read it out and notify together with the connection ID, etc.

A connection ID is comprised of a combination of a node address of the originator, that of the target and a serial number. The serial number is assigned in the order of processing. Thus, for instance, when the above-mentioned request for establishment of communication for "READY" was made first, the target sets a connection ID of "#1#2-001".

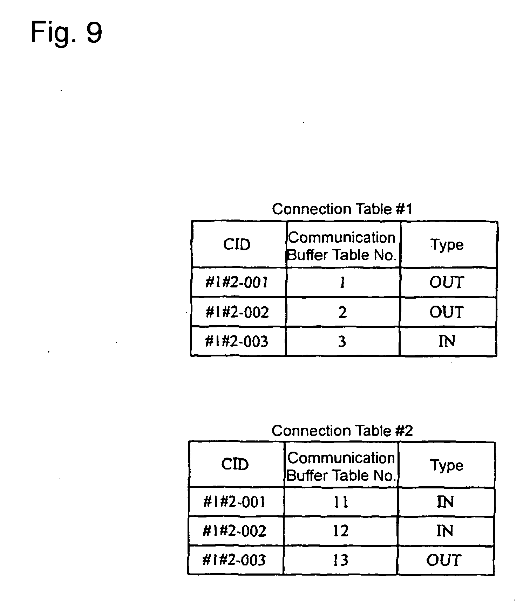

In contrast, if the target cannot correspond at the requested cycle, it displays the confirmation message such as "Not possible to correspond. Is the real cycle ** sec OK?", etc. on the display of the communication setup tool 30, and prompts the user for confirmation. If the user enters "Yes" to this confirmation message, the target notifies a real cycle that the target can correspond to, together with a request approval notice of (6). The real cycle has been set in advance in the second communication unit 12b, which is the target. Elaborately citing the information contained in the request approval notice, they are an approval notice (OK/NG), connection ID, node address of local station (node address on the side of the target), node address of counterpart station (node address on the side of the originator), and cycle (although some of them have been omitted here). Furthermore, since the request for establishment of communication is made for every variable name, the processes described in (4) to (6) above will be sequentially executed for "STOP" and "STATUS". In addition, when the target that has received each request for establishment of communication issues a request approval notice, connection tables having the data structure as shown in Fig. 9 is created on the originator and target. The connection tables are sequentially generated and updated, whenever one connection ID is assigned.

After communication is established with the procedure described above, various data such as ON/OFF information of Switch1 or Switch 2, motor status information, etc. is communicated. We describe the case in which the first communication unit 12a (#1) sends data of Switch 2 to the second communication unit 12b (#2). The MPU of the first communication unit 12a refers to the temporary internal table and reads out transmission data from the first CPU unit 11a. The temporary internal table has information on correspondence between the data for communications in the communication unit (transmission data) and real address of the CPU unit. Based on the temporary internal table, the first communication unit 12a obtains the real address of the memory of the CPU unit 11a that corresponds to the data for communications. Data transmission and reception between the first communication unit 12a and the first CPU unit 11a is conducted by way of the system bus 26. In detail, between the first communication unit 12a and the first CPU unit 12b, data stored in the real address DM100 of the first CPU unit 12b is stored and updated in the communication buffer with the timing such as IO refresh or peripheral process; etc. This also applies to the embodiments to be discussed later.

The first communication unit 12a stores the obtained data for communications in the communication buffer. Storage area of the communication buffer is uniquely determined by the communication buffer table. To transmit the data for communications, the first communication unit 12a refers to the connection table and generates a message frame. In fact, it includes in the message frame the connection ID "#1#2-002" and data stored in the data area of the table number "2" of the communication buffer table, and transmits it to the second communication unit 12b at the node address #2. When receiving the message of the connection ID "#1#2-002" addressed to itself, the second communication unit 12b recognizes from the connection table the table number of the communication buffer table to memorize, and stores the received data in the memory area of the communication buffer corresponding to the table number "12". Data transmission to be executed by the first communication unit 12a that we mean here may be that the first communication unit independently performs transmission, or that the second communication unit 12b may make a request for data to the first communication unit 12a which, in response, performs transmission. The transmission cycle shall be a fixed cycle (for instance, 5ms) defined when communication is established. This also applies to every embodiment to be discussed later.

In addition, between the second communication unit 12b and the second CPU unit 11b, data stored in the communication buffer table with predetermined timing is stored in the real address DM201 of the second CPU unit 11b. In fact, the second communication unit 12b knows from the temporary internal table that the real address of the data stored in the table number "12" of the communication buffer table is DM 201, it updates the data of the second CPU unit 11b with the timing of IO refresh of the second CPU unit 11b or peripheral process.

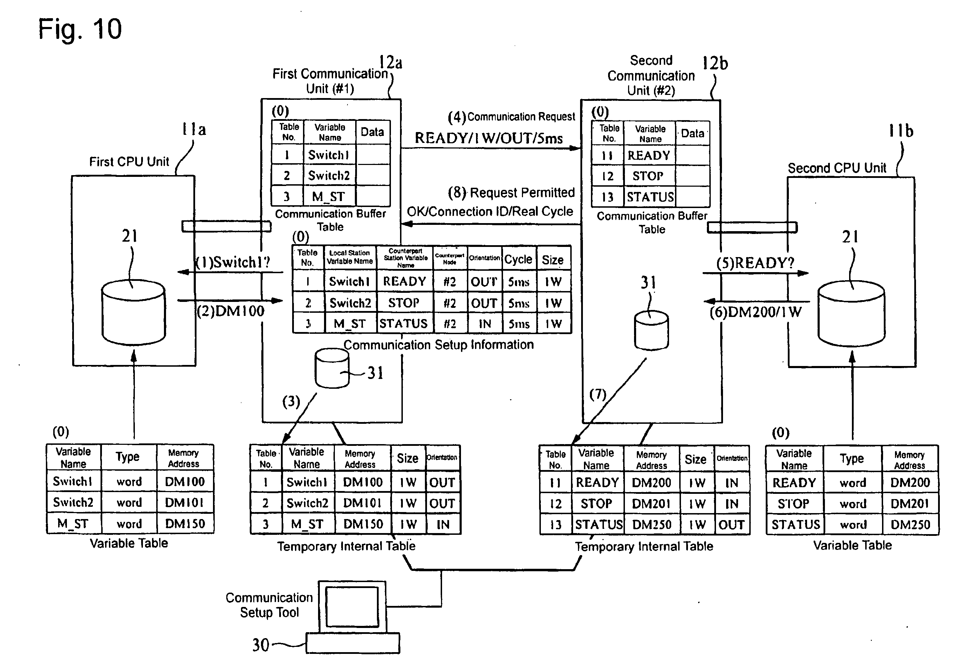

Fig. 10 shows a variant of the second embodiment. In the second embodiment mentioned above, the name solution process between each communication unit and CPU unit is done by respective units in advance before the setup process of connection ID takes place. In contrast, in the variant example, the name solution on the side of the target is done in the course of the process steps for setting a connection ID.

(0) In fact, manipulating the communication setup tool 30, the user generates a variable table for the first CPU unit 11a, that for the second CPU unit 11b, communication buffer table for the first communication unit, and that for the second communication unit, and downloads respective tables to corresponding units. Furthermore, manipulating the communication setup tool 30, the user generates communication setup information and stores it in the first communication unit 12a. Also in this variant example, the first communication unit 12a will be an originator without making a distinction between the sending side and receiving side, and retain the communication setup information for both transmission and reception.

(1) Next, for a variable name of the local station stored in the communication setup information, the first communication unit 12a on the side of the originator makes a request for name solution to the first CPU unit 11a. The request for name solution is to make an inquiry about a real address of the memory in the first CPU unit 11a in which data corresponding to the variable name of the local station is stored. In addition, in a variant of the execution of the request for name solution in the communication unit that shall be on the side of the originator, it is also possible to execute the request for name solution based on the variable name stored in the communication buffer table, instead of the variable name set in the communication setup information. This also applies to the variants of every embodiment to be discussed later. In addition, a request for name solution may be made one by one for every variable name or together for a plurality of variable names. This also applies to the variants of every embodiment to be discussed later.

(2) The first CPU unit 11a refers to the variable table in response to the received request for name solution and sends back the corresponding real address (memory address). Then, the first CPU unit 11a may send back data size together.

(3) The first communication unit 12a on the side of the originator creates a temporary internal table based on the information (real address, type: data size) returned from the first CPU unit 11a and the communication setup information retained by itself. The data structure of the temporary internal table to be created is similar to the second embodiment.

(4) In response to the command to establish communications from the communication setup tool 30, the first communication unit 12a (#1) on the side of the originator makes a request for establishment of communications to the second communication unit 12b (#2) on the side of the target, based on the temporary internal table. The information to be sent together with the request for establishment of communications includes a variable name of counterpart station/size/direction/cycle. The request for establishment of communications may include a variable name of the local station. In addition, since the node address of the local station and that of the counterpart station are included in the frame header of the request for establishment of communications, the communication unit that received the request will know from which communication unit of which node address the request for establishment of communications has been sent. The request for establishment of communication should be made one by one. In the figure, the request for establishment of communication is made to "READY" stored in the temporary internal table. Finally, the first communication unit 12a makes a request for establishment of communications, for all of the variable names to be stored in the communication setup information.

(5) The second communication unit 12b that received the request for establishment of communications makes a request for name solution for the received variable name. In the shown example, the second communication unit 12b makes a request to inquire about the real address for the variable name "READY".

(6) The second CPU unit 11b refers to the variable table in response to the request for name solution, obtains the real address and type (size) corresponding to the variable name, and sends it back to the second communication unit 12b. In the figure, the second CPU unit 11b returns "DM200/1W(meaning 1 word)" to "READY" for which the inquiry was made.

(7) The second communication unit 12b checks the request for establishment of communications received from the first communication unit 12a, based on the memory address and type (size) obtained from the second CPU unit 11b. To be specific, the check items include "Have the requested variable name?", "Is the data of the variable name set in the communication buffer?", "Does size match?", "Is it possible to compare and correspond to the real cycle and the requested cycle?", etc. The second communication unit 12b makes a decision to authorize the request for establishment of communications when it contains all of the conditions, while it makes a decision not to authorize the request for establishment of communications when any one of the conditions except for the requested cycle does not match. In addition, if the requested cycle is impossible to correspond, the tool displays the message such as "The requested cycle not possible to correspond. Is the real cycle ** sec OK?", etc., and prompts the user for confirmation. When the user entry of "Yes" is received, it makes a decision to authorize the request for establishment of communications on the condition that communications be conducted in the real cycle presented.

When the request is correct and the second communication unit 12b authorizes the request for establishment of communications, it creates a temporary internal table. The data structure of the temporary internal table is similar to the second embodiment. Here the temporary internal table is created at once from the received request for establishment of communications and the correspondence relation between the variable name and real address obtained from the name solution process. In fact, unlike in the second embodiment in which the incomplete temporary internal table with "direction" blank is once created, a temporary internal table that stores all information related to the variable name is created. In addition, the second communication unit 12b displays "Requested Condition OK" and "Content of Establishment of Communications" in the monitor of the communication setup tool 30.

(8) When the second communication unit 12b authorizes the request for establishment of communications, it identifies a connection ID and sends back the identified connection ID and "establishment request approval notice" to the first communication unit 12a. Then, the second communication unit 12b may transmit the real cycle together.

Then, similar to the second embodiment, both of the first communication unit 12a and second communication unit 12b create a connection table. In addition, they repeatedly execute the processes of (4) to (8) above for every variable name, makes a request for establishment of communication for all variable names (READY, STOP and STATUA), and set a connection ID. Thus, in the illustrated example, as a request for establishment of communications is made separately for READY, STOP and STATUS, the processes from (4) to (8) mentioned above will be executed 3 times in total. After the communication is established, as with the second embodiment, communication is conducted between the communication units, and thus we omit the description thereof.

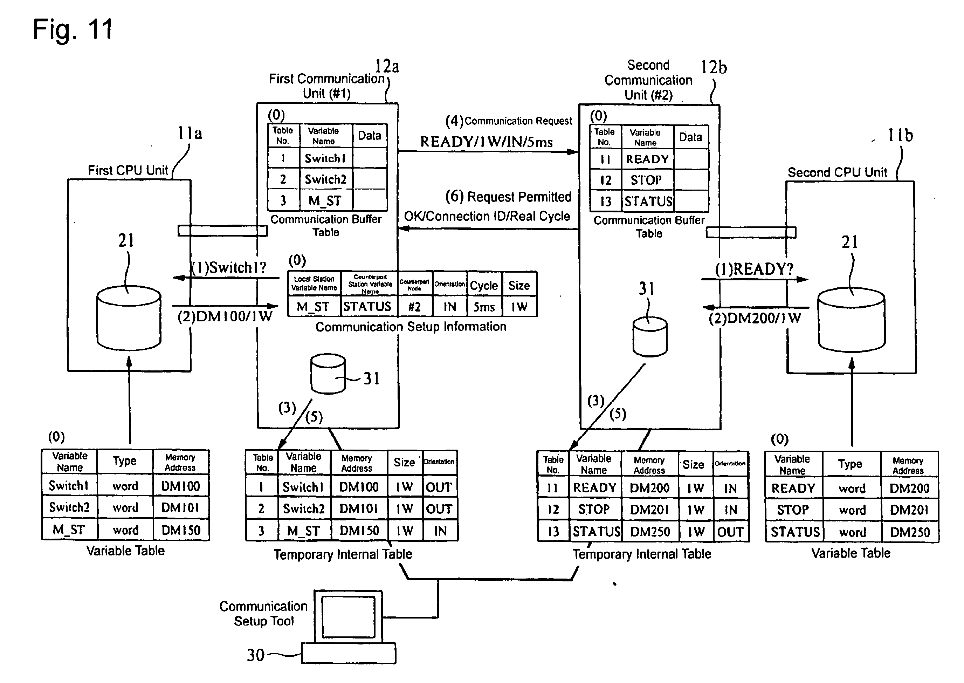

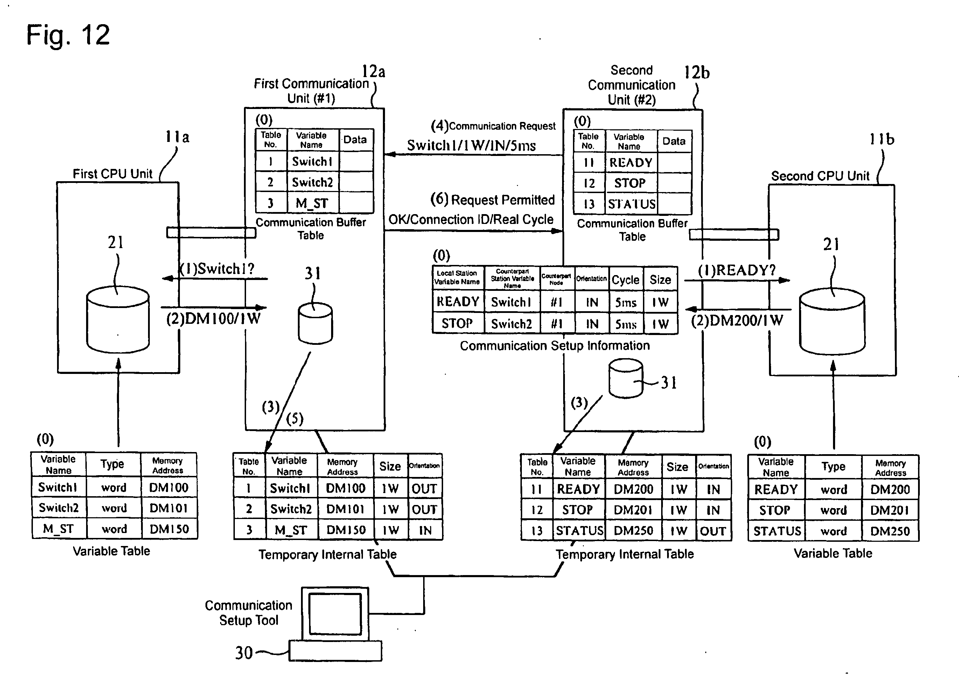

Fig. 11 and Fig. 12 illustrate a third embodiment of this invention. Similar to the second embodiment, in the third embodiment, communication setup information for setting one connection ID is set in one of the communication units. However, the communication unit that sets the communication setup information is only the side that receives data. With this, as in the second embodiment, if data to be sent and data to be received exist in one communication unit, each communication unit shall have the communication setup information based on the received data. For instance, as shown in Fig. 11, the first communication unit 12a comprises the communication setup information for the variable names of the local stations of "READY" and "STOP".

In the following, we describe functions of respective units while providing an explanation of name solution to be carried out between the connected CPU unit and communication units and the process steps in determining a connection ID to be used for actual data transmission/reception between the communication units.

(0) Respective preparation process functions of a variable table of the first CPU unit 11a, that of the second CPU unit 11b, communication buffer table of the first communication unit 12a, and that of the second communication unit 12b are similar to the second embodiment.

In addition, manipulating the communication setup tool, the user generates communication setup information to store in the communication unit on the receiving side, and stores it in the corresponding communication unit. In fact, the communication setup information of the first communication unit 11a is created for the variable name of the local station of "M_ST" and that of the second communication unit 12a is created for the 2 variable names of the local station of "READY" and "STOP". The communication setup information to be generated here is a variable name used in the local station, that to be used in the counterpart station, node address of the other end of the communications, direction of communications (IN), cycle of data transmission/reception, and data size. In this embodiment, since the communication setup information is set on the receiving side, direction of communication must be IN and thus may be omitted.

In addition, similar to the second embodiment, a communication unit to which communication setup information is set shall be an originator and a communication unit to which it is not set shall be a target. Thus, in this embodiment, for the communication setup information of "M_ST", the first communication unit 12a shall be the originator and the second communication unit 12b the target. For the communication setup information for "READY" and "STOP", the second communication unit 12b shall be the originator and the first communication unit 12a the target. Thus, the originator and target shall be decided for every communication setup information.

(1) Downloading of a variable table and communication buffer table to each unit enables each communication unit 12a, 12b to execute a name solution process. For instance, triggered by resetting, the communication unit executes name solution. Although it is similar to the second embodiment, we give a specific account. Respective communication units 12a, 12b makes inquiries to the CPU unit about in which address (real address) of the memory of the CPU unit data corresponding to variable name is stored, based on the variable name stored in the communication buffer table, without making a distinction between the originator and target. In other words, the first communication 12a makes an inquiry to the first CPU unit 11a about the real address in order to execute the name solution process of the variable name of "Switch1", for instance. Similarly, the second communication unit 12b makes an inquiry to the second CPU unit 11a about the real address of the memory to which data is stored, in order to execute the name solution process of the variable name of "READY".

(2) The first CPU unit 11a not only accesses to the variable table with the variable name for which inquiry was made and obtains the corresponding real address (DM100), but also sends back the obtained real address, as a response to the inquiry, to the first communication unit 12a. Similarly, the first communication unit 12a makes inquiries about real addresses corresponding to "Switch2" and "M_ST", and obtains the corresponding real addresses, as a response, from the first CPU unit 11a. In the illustrated example, although the inquiries are made one by one, they can be made together. Although illustration is omitted, data size (type) is also returned when this real address is sent back.

Similarly, the second communication unit 12b makes inquiries to the second CPU unit 11b about real addresses of the memory in which data corresponding to the variable names "READY", "STOP" and "STATUS" is stored. Then, the second CPU unit 11b accesses to the variable table with the variable name for which inquiry was made as a key, and not only obtains the corresponding real address and type but also sends back the obtained real address and type, as a response to the inquiry, to the second communication unit 12b. In the figure, the second CPU unit 1b sends back "DM200/1W" to the inquiry on "READY".

Since the originator side has communication setup information, it does not need the data size as a response from the CPU unit, in particular. Thus, although it is acceptable if it is checked whether it is the originator.side having the communication setup information when an inquiry for name solution is made, and the data size is requested only when it is not the originator side, a response to the inquiry for name solution is set to be a real address and type (size), irrespective of whether it is the originator side, because the processes will be complicated.

In addition, the timing of executing the name solution process is not limited to the one based on the resetting mentioned above, but can be set freely and created if at least the communication buffer table and variable table are stored.

(3) Respective communication units 12a, 12b store the information that the name is solved. If storage area is a temporary internal table, the temporary internal tables as shown in Fig. 11 and Fig. 12 are completed. The completion of the temporary internal tables terminates the name solution process. In this embodiment, since the receiving side is the originator side, direction of data for which communication setup information is set must be "IN".

In addition, as the communication unit on the side of the target has no communication setup information, it is directly not known whether direction of data transmission (transmission: OUT, reception: IN) is distinguished, etc. However, the second communication unit 12b knows from the information stored in the communication buffer table the variable name of the local station of the data communicating with the first communication unit 12a, it can recognize correspondence between the variable name and real address by making inquiries to the second CPU unit 11b about the real address of the variable name. Thus, for all of the variable names stored in the communication buffer table, the second communication unit 12b can associate data in the communication buffer table, and columns of the variable name, real address, and size (to be set based on the type) by executing processes (1) and (2), and stores the associated data in the temporary internal table. Furthermore, if the communication setup information is not set for the variable name existing in the communication buffer table, it can be presumed that the variable name is data on the sending side. Thus, the "direction" can be considered OUT. This enables creation of the temporary internal table in which all data have been associated. In addition, similar to the second embodiment, the communication unit on the side of the target that has no communication setup information may be designed to create the temporary internal table with the communication direction being blank.

(4) Next, we describe the connection ID setup process steps. The steps are basically similar to the second embodiment. In the third embodiment shown in Fig. 11 and Fig. 12, firstly, the first communication unit 12a with such a small node address as #1 runs. In fact, as shown in Fig. 11, the first communication unit 12a issues to the second communication unit 12b a request for establishment of communications having "STATUS/1W/IN/5ms". It may include the variable name of the local station in the request for establishment of communications. In addition, since the node address of the local station and that of the counterpart station are stored in the frame header of the request for establishment of communications, the communication unit that has received the request will know from which communication unit at which node address the request for establishment of communications has been sent.

(5) The target (the second communication unit 12b) that has received the request for establishment of communications checks the request. In fact, it accesses to the temporary internal table and checks whether there is the variable name for which the request for establishment of communications was made. If the variable name exists, the target will check if the size matches. Furthermore, if it does, it confirms that the stored "direction" is OUT that is opposite to the "direction information" (IN) sent together with the request for establishment of communications, if temporary registration is made in the column "direction" of the temporary internal table, in the process (3) executed for the name solution, and determines the content of the temporary internal table. In addition, when the column "direction" of the temporary internal table created in the process (3) is left blank, the second communication unit 12b enters "OUT" opposite to the received direction in the column "direction" corresponding to STATUS of the temporary internal table that was blank.

Although presence or absence of a variable name may be checked, based on the temporary internal table, as described above, the invention is not limited to this, and the check may also be made based on the communication buffer table. Furthermore, it would be also acceptable if presence or absence of a variable name were double-checked based on both the temporary internal table and communication buffer table.

(6) In addition, the target compares the real cycle with the requested cycle, and checks whether it is possible to correspond. If it is possible, the target identifies a connection ID and displays "Requested Condition OK" and "Content of Establishment of Communications" in the monitor of the communication setup tool 30. Then, the target notifies "Requested Condition OK" and the connection ID to the originator that has issued the request for establishment of communications. Then, it may also send the real cycle simultaneously. Since the real cycle on the side of the target is stored in its system memory, the target reads it out and notifies together with the connection ID, etc. In addition, if the target cannot correspond with the requested cycle, it corresponds with steps similar to the second embodiment.

A connection ID is comprised of a node address of the originator - address of the target - serial number. The serial number is assigned in the order of processes. Thus, when the request for establishment of communications is issued first for "STATUS" mentioned above, the second communication unit 12b that is the target sets the connection ID of "#1#2-001" for the data of STATUS.

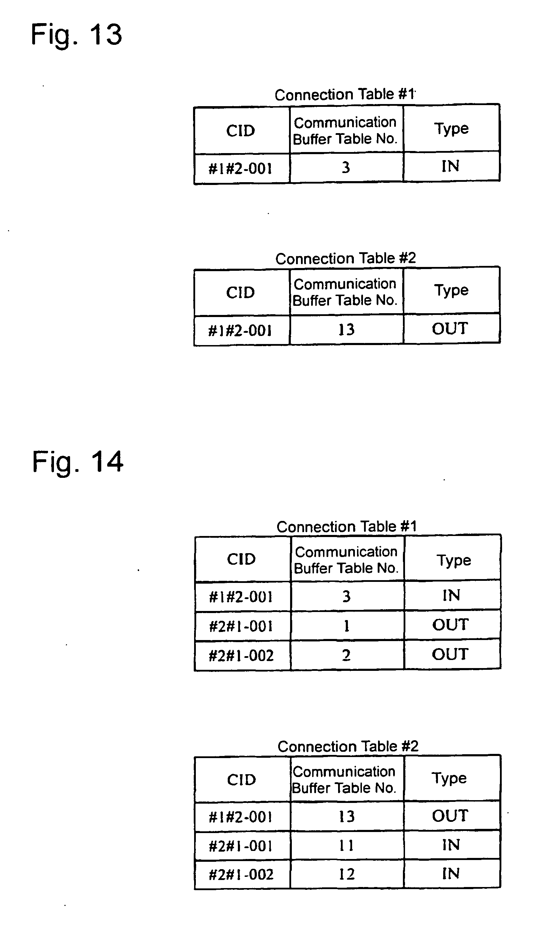

In addition, when the target that received each request for establishment of communications issues a request approval notice together with the connection ID, connection tables having the data structure shown in Fig. 13 are created in the originator and target. The connection tables are sequentially created and updated whenever one connection ID is assigned.

Although a request for establishment of communications is made in terms of a connection ID, namely, one by one for every variable name, the connection ID setup process in the communication setup information of the first communication unit 12a will complete when the connection ID setup for "STATUS" mentioned above ends, since in the data having the first communication unit 12a as the originator the variable name of the local station is one of "M_ST". Then, as shown in Fig. 12, the second communication unit 12b having the next smaller node address #2 issues a request for establishment of communications.

(4) To be specific, the second communication unit 12b first issues a request for communications for the variable name of the local station "READY" that is stored at the head of the communication setup information. In fact, as shown in Fig. 12, the second communication unit 12b issues the request for establishment of communications having "Switch1/1W/IN/5ms" to the first communication unit 12a. It may include the variable name of the local station in the request for establishment of communications. In addition, since the node address of the local station and that of the counterpart station are included in the frame header of the request for establishment of communications, the communication unit that has received the request will know from which communication unit at which node address the request for establishment of communications has been sent.

(5) The target that has received the request for establishment of communications (the first communication unit 12a) checks the request. In fact, it accesses to the temporary internal table and checks whether there is the variable name for which the request for establishment of communications was made. If the variable name exists, the target will check if the size matches. Furthermore, if it does, it confirms that the stored "direction" is OUT that is opposite to the "direction information" (IN) sent together with the request for establishment of communications, if temporary registration is made in the column "direction" of the temporary internal table, in the process (3) executed for the name solution, and determines the content of the temporary internal table. In addition, when the column "direction" of the temporary internal table created in the process (3) is left blank, the first communication unit 12a enters "OUT" opposite to the received direction in the column "direction" corresponding to Switch1 of the temporary internal table that was blank.

Although presence or absence of a variable name may be checked, based on the temporary internal table, as described above, the invention is not limited to this, and the check may also be made based on the communication buffer table. Furthermore, it would be also acceptable if presence or absence of a variable name were double-checked based on both the temporary internal table and communication buffer table.

(6) In addition, the target compares the real cycle with the requested cycle, and checks whether it is possible to correspond. If it is possible, the target identifies a connection ID and displays "Requested Condition OK" and "Content of Establishment of Communications" in the monitor of the communication setup tool 30. Then, the target notifies "Requested Condition OK" and the connection ID to the originator that has issued the request for establishment of communications. Then, it may also send the real cycle simultaneously. Since the real cycle on the side of the target is stored in its system memory, the target reads it out and notifies together with the connection ID, etc. In addition, if the target cannot correspond with the requested cycle, it corresponds with steps similar to the second embodiment.

A connection ID is comprised of a node address of the originator - address of the target - serial number. The serial number is assigned in the order of processes. Thus, when the request for establishment of communications is issued first for "Switch1" mentioned above, the first communication unit 12a that is the target sets the connection ID of "#2#1-001" for the data of Switch1.

The second communication unit then makes a request for establishment of communications having "Switch2/1W/IN/5ms" to the first communication unit 12a in order to execute the connection ID setup process for the variable name of the local station "STOP". Based on the request for establishment of communications, the first communication unit 12a sets the connection ID for "Switch2" by executing the processes of (5) and (6) described above.

With this, when the target that has received each request for establishment of communication issues a request approval notice, connection tables having the data structure shown in Fig. 14 are finally created on the originator and target.

In this embodiment, since the receiving side is the originator, direction of data that makes the request for establishment of communications is "IN". Thus, "IN" may be omitted from actual transmission. In such a case, the communication unit on the side of target will execute the process, aware that the omitted direction is "IN" and the direction on the side of target will be "OUT", when it has received the request for establishment of communications.

After communication is established for communication setup information of all of the originators, transmission/reception of the corresponding data is conducted between the communication unit on the side of originator and that on the side of the target, by using the connection ID of the connection table of Fig. 14.

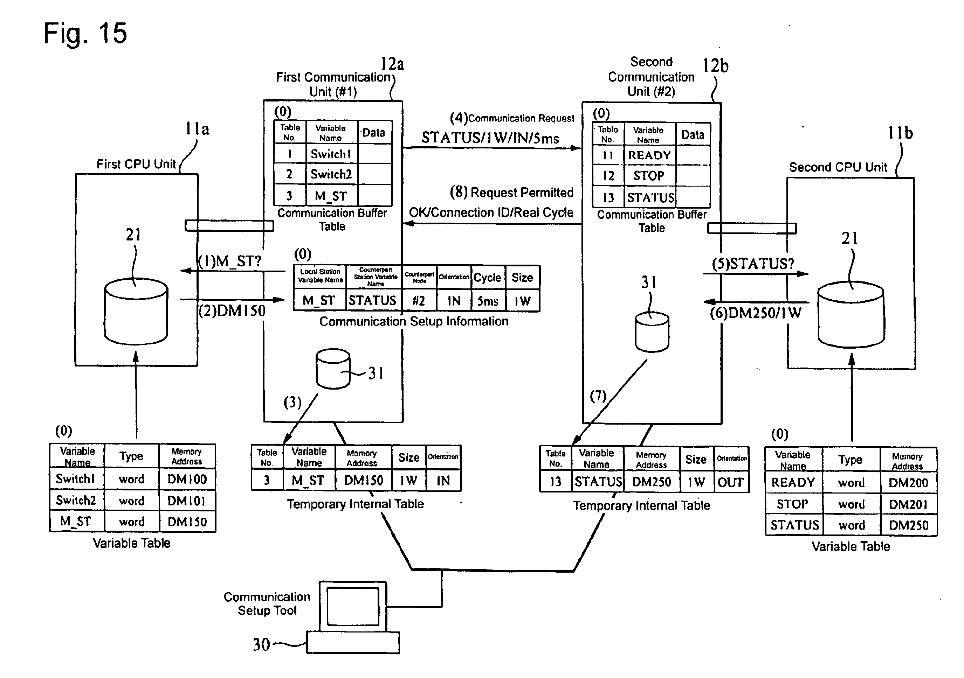

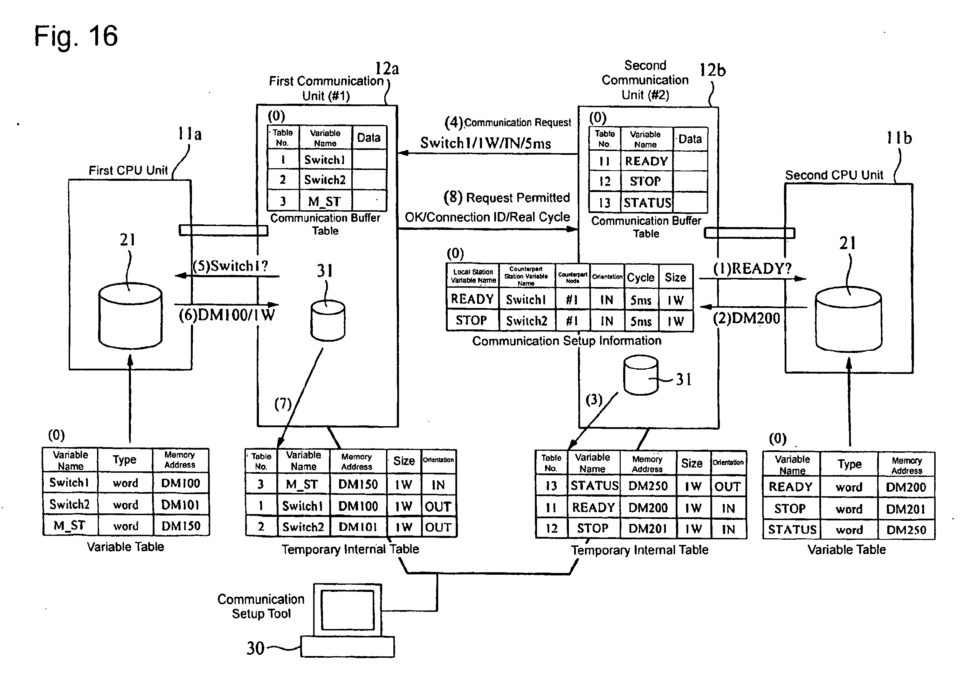

Fig. 15 and Fig. 16 show a variant of the third embodiment. In the third embodiment mentioned above, the name solution process between each communication unit and CPU unit is done between respective units in advance, before the connection ID setup process takes place. In contrast, in this variant, the name solution on the side of the target is to be done in the course of the process steps of setting the connection ID.

(0) Respective preparation process functions of a variable table of the first CPU unit 11a, that of the second CPU unit 11b, communication buffer table of the first communication unit 12a, and that of the second communication unit 12b are similar to the third embodiment described above.

Next, the name solution process and connection ID process are carried out, and the communication units having a smaller node address sequentially execute these processes. Thus, in this embodiment, the processes are executed when the first communication unit is the originator. Now we describe the processes by using Fig.15.

(1) The first communication unit 12a on the side of the originator makes a request for name solution to the first CPU unit 11a for the variable name of the local station (M_ST) stored in the communication setup information. To be specific, the first communication unit 12a makes an inquiry to the first CPU unit 11a about the real address in which data having the variable name "M_ST" is stored. In addition, the name solution request in the communication unit to be on the side of the originator can be executed based on the variable name stored in the communication buffer table, instead of the variable name stored in the communication setup information. In addition, a request for name solution may be made one by one for every variable name, or may be made together for a plurality of the variable names.

(2) The first CPU unit 11a refers to the variable table in response to the received request for name solution, and sends back the corresponding real address (DM150). Then, the first CPU unit 11a may send back the type (size) together.

(3) The first communication unit 12a on the side of the originator generates a temporary internal table based on the information returned from the first CPU unit 11a and the communication setup information retained by itself. In other words, a temporary internal table for "M_ST" is created. In addition, if the table number of the communication buffer table is not described in the communication setup information, the first communication unit 12a refers to the communication buffer table, and obtains the table number, and thus the temporary internal table will be created. The data structure of the temporary internal table to be created is similar to the third embodiment.

(4) In response to the command to establish communications from the communication setup tool 30, for the variable name stored in the communication setup information, the first communication unit 12a (#1) on the side of the originator makes a request for establishment of communications to the second communication unit 12b (#2) on the side of the target, based on the temporary internal table. The information to be transmitted together with the request for establishment of communications may include the variable name of counterpart station/size/direction/cycle. The variable name of the local station may also be included in the request for establishment of communications. In addition, since the node address of the local station and that of the counterpart station are stored in the frame header of the request for establishment of communications, the communication unit that has received the request will know from which communication unit at which node address the request for establishment of communications has been sent. The request for establishment of communications is made one by one. In the figure, the request for establishment of communications that corresponds to the variable name of the local station "M_ST" stored in the temporary internal table and has "STATUS/1W/IN/5ms" is made. Needless to say, the direction of communications "IN" may be omitted.

(5) The second communication unit 12b that has received the request for establishment of communications makes a request for name solution for the received variable name to the second CPU unit 11b. In the illustrated example, the second communication unit 12b makes a request to inquire about the real address of the variable name "STATUS".

(6) The second CPU unit 11b refers to the variable table in response to the request for name solution, obtains the memory address and type (size) corresponding to the variable name, and returns them to the second communication unit 12b.

(7) The second communication unit 12b checks the request for establishment of communications received from the first communication unit 12a based on the memory address and type (size) obtained from the second CPU unit 11b. The processes here are similar to the variant of the second embodiment. To be specific, the check items include "Have the requested variable name?", "Is the data of the variable name set in the communication buffer?", "Does size match?", "Is it possible to compare and correspond to the real cycle and the requested cycle?", etc. The second communication unit 12b makes a decision to authorize the request for establishment of communications when it contains all of the conditions, while it makes a decision not to authorize the request for establishment of communications when any one of the conditions except for the requested cycle does not match. In addition, if the requested cycle is impossible to correspond, the tool displays the message such as "The requested cycle not possible to correspond. Is the real cycle ** sec OK?", etc., and prompts the user for confirmation. When the user entry of "Yes" is received, it makes a decision to authorize the request for establishment of communications on the condition that communications be conducted in the real cycle presented.

Then, if the request is correct, and when the second communication unit 12b authorizes the request for establishment of communications, it generates a temporary internal table for the variable name (STATUS). The data structure of the temporary internal structure is similar to the third embodiment. Here the temporary internal table is created at once from the received request for establishment of communications and the correspondence relation between the variable name and real address obtained from the name solution process. In fact, a temporary internal table that stores all information related to "STATUS" is created. In addition, the second communication unit 12b displays "Requested Condition OK" and "Content of Establishment of Communications" in the monitor of the communication setup tool 30.

(8) When authorizing the request for establishment of communications, the second communication unit 12b identifies a connection ID and sends back the identified connection ID together with an "establishment request approval notice" to the first communication unit 12a. Then, the second communication unit 12b may send the real cycle together.

The request for establishment of communications is made in terms of a connection ID, namely, one by one for every variable name. The connection ID setup process in the communication setup information of the first communication unit 12a will complete when the connection ID setup for "STATUS" mentioned above ends, since in the data having the first communication unit 12a as the originator the variable name of the local station is one of "M_ST". Then, as shown in Fig. 16, the second communication unit 12b having the next smaller node address #2 issues a request for establishment of communications.

(1) First, for the variable name of the communication setup information, the second communication unit 12b makes a request for name solution to the second CPU unit 11b. In other words, it makes an inquiry about "READY" first. Needless to say, the second communication unit 12b may request for name solution for "STOP" in addition to "READY" together.

(2) The second CPU unit 1b refers to the variable table in response to the received request for name solution, and sends back the corresponding real address (DM 202 for READY) . Then, the second CPU unit 11b may send back the type (size) together.

(3) The second communication unit 12b on the side of the originator generates a temporary internal table based on the information returned from the second CPU unit 11b and the communication setup information retained by itself, for "READY" and "STOP".

(4) In response to the request for establishment of communications from the communication setup tool 30, for the variable name stored in the communication setup information, the second communication unit 12b on the side of the originator (#2) makes a request for establishment of communications to the first communication unit 12a on the side of the target (#1), based on the temporary internal table. The information transmitted with the request for establishment of communications includes the variable name of counterpart station/size/direction/cycle. The request for establishment of communications is made one by one. In the figure, the request for establishment of communications having "Switch1/1W/IN/5ms" corresponding to the variable name of the local station "READY" stored in the temporary internal table is made. Here "IN" may be omitted. The variable name of the local station may be included in the request for establishment of communications. In addition, since the node address of the local station and that of the counterpart station are stored in the frame header of the request for establishment of communications, the communication unit that has received the request will know from which communication unit at which node address the request for establishment of communications has been sent.

(5) The first communication unit 12a that has received the request for establishment of communications makes a request for name solution for the received variable name to the first CPU unit 11a. In the illustrated example, the first communication unit 12a makes a request to inquire about the real address for the variable name "Switch1".

(6) The first CPU unit 11a refers to the variable table in response to the request for name solution, obtains the memory address and type (size) corresponding to the variable name, and returns them to the first communication unit 12a.

(7) The first communication unit 12a checks the received request for establishment of communications received from the second communication unit 12b based on the obtained memory address and type (size). Since specifics of the check process are similar to the one executed in the second communication unit 12b mentioned above, we omit the description thereof.

Then, if the request is correct, and when the first communication unit authorizes the request for establishment of communications, it generates a temporary internal table. The data structure of the temporary internal structure is similar to the third 'embodiment. Here the temporary internal table is created at once for the variable name to be the subject of setup of the current connection ID from the received request for establishment of communications, the correspondence relation between the variable name and real address obtained from the name solution process, and the table number of the communication buffer table. In fact, a temporary internal table that stores all information related to "Switch1" is created first. In addition, the second communication unit 12b displays "Requested Condition OK" and "Content of Establishment of Communications" in the monitor of the communication setup tool 30.

(8) When authorizing the request for establishment of communications, the second communication unit 12b identifies a connection ID and sends back the identified connection ID together with an "establishment request approval notice" to the first communication unit 12a. Then, the second communication unit 12b may send the real cycle together.

In addition, as the connection ID setup process is done for every data, the connection ID setup process for "Switch2" will be done if the connection ID setup process for Switch1 is complete. In fact, processes of (4) to (8) described above will be repeatedly executed. This would also create the temporary internal table for "Switch2".

Similar to the third embodiment, both of the first communication unit 12a and the second communication unit 12b create connection tables. The final connection tables to be created here will be same as Fig. 14. After communication is established for all of the variables, communications will be conducted among communication units by employing the connection ID.

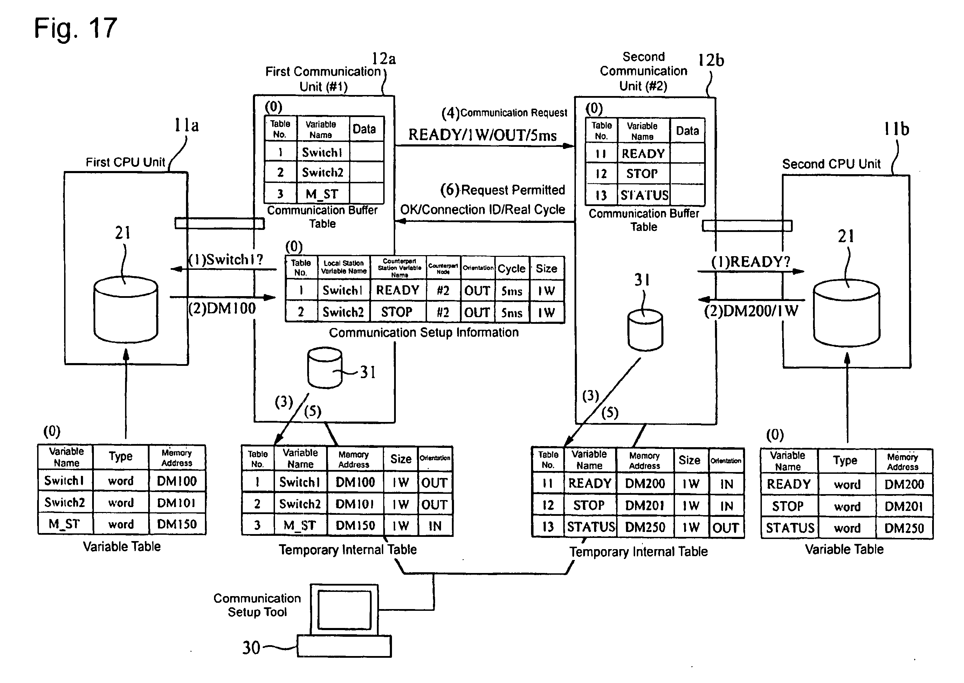

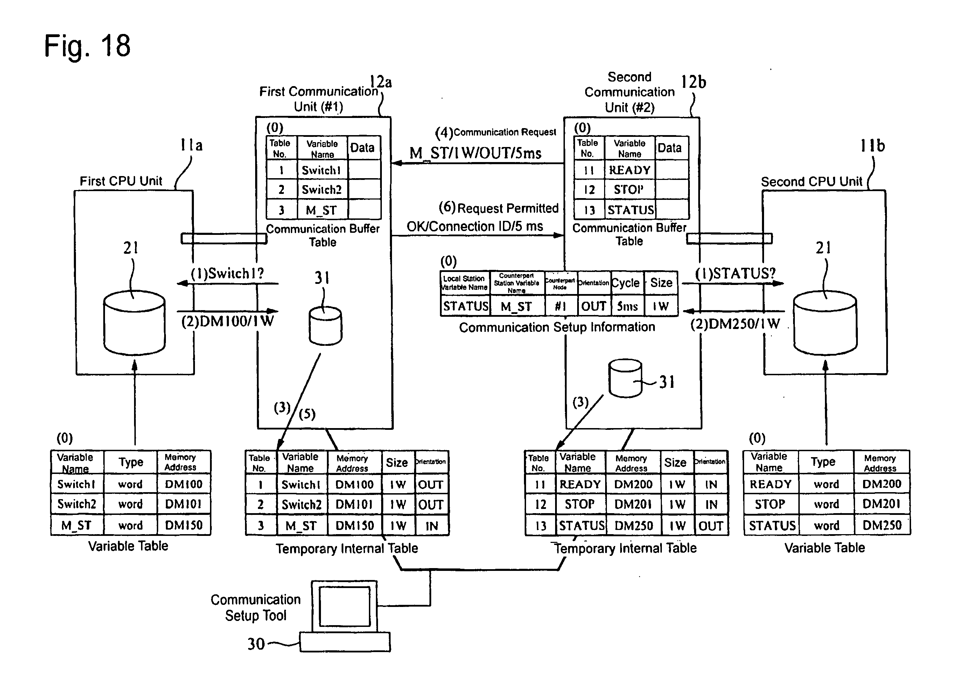

Fig.17 and Fig. 18 show a fourth embodiment of the invention. Contrary to the third embodiment, in the fourth embodiment, the sending side is set to be the originator. Thus, as shown in Fig. 17, the first communication unit 12a comprises the communication setup information for the variable names of the local station of "Switch1" and "Switch2". Also, as shown in Fig. 18, the second communication unit 12b comprises the communication setup information for the variable name of the local station of "STATUS".

In the following, we describe functions of respective units while providing an explanation of name solution to be carried out between the connected CPU unit and communication units and the process steps in determining a connection ID to be used for actual data transmission/reception between the communication units.

(0) Respective preparation process functions of a communication buffer table of the first CPU unit 11a, that of the second CPU unit 11b, communication buffer table of the first communication unit 12a, and that of the second communication unit 12b are similar to the second and third embodiments.

In addition, manipulating the communication setup tool 30, the user generates communication setup information to store in the communication unit on the sending side, and stores it in the corresponding communication unit. In fact, the communication setup information of the first communication unit 11a is created for the 2 variable names of the local station of "Switch1" and "Switch2" , and that of the second communication unit 12a is created for the variable name of the local station of "STATUS". The communication setup information to be generated here is a variable name used in the local station, that to be used in the counterpart station, node address of the other end of the communications, direction of communications (OUT) , cycle of data transmission/reception, and data size. In this embodiment, since the communication setup information is set on the receiving side, direction of communication must be OUT and thus may be omitted.

In this embodiment, for the communication setup information of "Switch1" and "Switch2", the first communication unit 12a shall be the originator and the second communication unit 12b shall be the target. For the communication setup information of "STATUS", the second communication unit 12b shall be the originator and the first communication unit 12a shall be the target. Thus, the originator and target are determined for every communication setup information.

After (1) and (2) the variable table and communication buffer table are downloaded to respective communication units, the name solution process in each communication unit 12a, 12b is similar to the second and third embodiments. In fact, both the communication unit 12a on the side of the originator and the communication unit 12b on the side of the target issue a request for name solution to the CPU unit of the same programmable controller based on the variable name in the communication buffer table respectively possessed, and obtain the corresponding real address and size.

The process of (3) is almost same as that of the second and third embodiments. In this embodiment, however, as the receiving side is the originator, direction of the data for which the communication setup information is set must be "OUT". In addition, for a variable name existing in the communication buffer table, if no communication setup information is set, the "direction" can be considered IN, since it can be presumed that the variable name is data on the sending side. This process of (3) could create a temporary internal table in which all data is associated. In addition, similar to the second embodiment, the communication unit on the side of the target that has no communication setup information may alternatively create a temporary internal table with the direction of communication being blank.

The process of (4) is also similar to the second and third embodiments. In the fourth embodiment, firstly, the first communication unit 12a with such a small node address as #1 runs. In fact, as shown in Fig. 17, the first communication unit 12a issues to the second communication unit 12b a request for establishment of communications having "READY/1W/OUT/5ms". It may include the variable name of the local station in the request for establishment of communications. In addition, since the node address of the local station and that of the counterpart station are stored in the frame header of the request for establishment of communications, the communication unit that has received the request will know from which communication unit at which node address the request for establishment of communications has been sent.

The process of (5) is almost similar to the second and third embodiments as well. In fact, the target (the second communication unit 12b) that has received the request for establishment of communications checks the request. In fact, it accesses to the temporary internal table and checks whether there is the variable name for which the request for establishment of communications was made. If the variable name exists, the target will check if the size matches. Furthermore, if it does, it confirms that the stored "direction" is IN that is opposite to the "direction information" (OUT) sent together with the request for establishment of communications, if temporary registration is made in the column "direction" of the temporary internal table, in the process (3) executed for the name solution, and determines the content of the temporary internal table. In addition, when the column "direction" of the temporary internal table created in the process (3) is left blank, the second communication unit 12b enters "IN" opposite to the received direction in the column "direction" corresponding to "READY" and "STOP" of the temporary internal table that was blank.

Similar to the second and third embodiments, although presence or absence of a variable name may be checked based on the temporary internal table, as described above, the invention is not limited to this, and the check may also be made based on the communication buffer table. Furthermore, it would be also acceptable if presence or absence of a variable name were double-checked based on both the temporary internal table and communication buffer table.

(6) In addition, the target compares the real cycle with the requested cycle, and checks whether it is possible to correspond. This process is almost similar to the second and third embodiments as well. When a request for establishment of communications is first made for "READY" as described above, however, the second communication unit 12b that is the target sets the connection ID of "#1#2-001" for RADY data.

The first communication unit 12b then makes a request for establishment of communications of "STOP/1W/OUT/5ms" to the second communication unit 12a in order to execute the connection ID setup process. Based on this request for establishment of communications, the second communication unit 12b sets the connection ID (#1#2-002) for "STOP" by executing processes of (5) and (6).

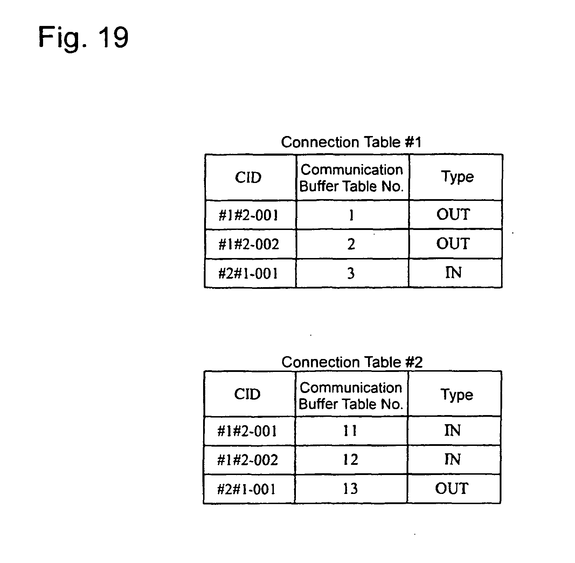

In addition, when the target that has received each request for establishment of communications issues a request approval notice together with the connection ID, connection tables having the data structure as shown in Fig. 9 are created on the originator and target. The connection tables are sequentially created and updated whenever one connection ID is assigned. Fig. 19 illustrates the finished condition and in the connection ID setup process based on the first communication unit 12a up to the second connection table is created.

When the connection ID setup process for all the variable names stored in the communication setup information of the first communication unit 12a, as shown in Fig. 18, the second communication unit 12b with the next smaller node address of #2 issues a request for establishment of communications.

(4) To be specific, first, the second communication unit 12b issues a request for establishment of communications for the variable name of the local station "STATUS". In fact, as shown in Fig. 18, the second communication unit 12b issues a request for establishment of communications having "M_ST/1W/OUT/5ms" to the first communication unit 12a. Here description of OUT may also be omitted.

(5) The target that has received the request for establishment of communications (the first communication unit 12a) checks the request. In fact, it accesses to the temporary internal table and checks whether there is the variable name for which the request for establishment of communications was made. If the variable name exists, the target will check if the size matches. Furthermore, if it does, it confirms that the stored "direction" is IN that is opposite to the "direction information" (OUT) sent together with the request for establishment of communications, if temporary registration is made in the column "direction" of the temporary internal table, in the process (3) executed for the name solution, and determines the content of the temporary internal table. In addition, when the column "direction" of the temporary internal table created in the process (3) is left blank, the first communication unit 12a enters "IN" opposite to the received direction in the column "direction" corresponding to "M_ST" of the temporary internal table that was blank.

In addition, although presence or absence of a variable name may be checked based on the temporary internal table, as described above, the invention is not limited to this, and the check may also be made based on the communication buffer table. Furthermore, it would be also acceptable if presence or absence of a variable name were double-checked based on both the temporary internal table and communication buffer table.

(6) In addition, the target compares the real cycle with the requested cycle, and checks whether it is possible to correspond. This process is also handled with the steps similar to the second and third embodiments. In this embodiment, when a request for establishment of communications for "M_ST" as described above is first issued, the first communication unit 12a that is the target sets the connection ID of "#2#1-001" for data of "M_ST".

With this, when the target that has received each request for establishment of communications issues a request approval notice together with the connection ID, connection tables finally having the data structure as shown in Fig. 19 are created on the originator and target. After communications are established for all of the variables, communications are conducted among the communication units by employing the connection ID.

In this embodiment, since the sending side is the originator, direction of the data that makes a request for establishment of communications is "OUT". Thus, "OUT" may be omitted from actual transmission. In such a case, the communication unit on the side of target will execute the process, aware that the omitted direction is "IN" and the direction on the side of target will be "IN" , when it has received the request for establishment of communications.

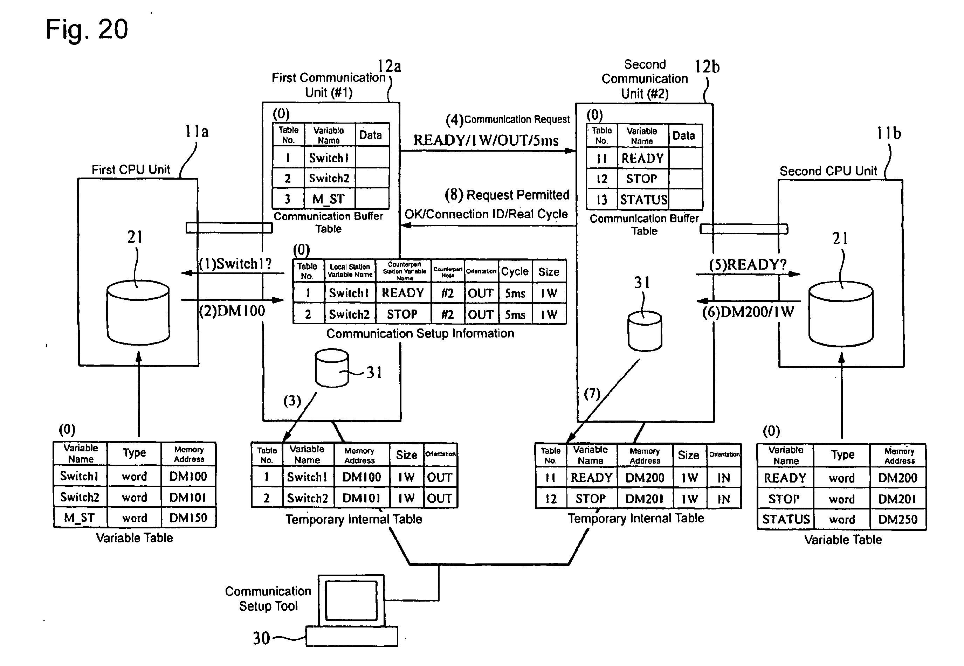

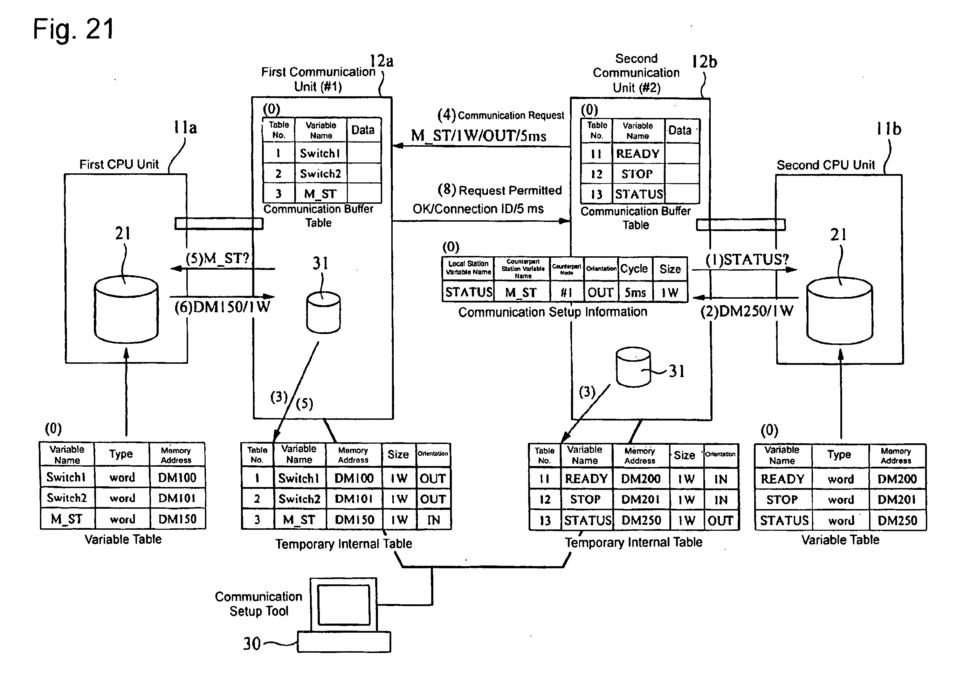

Fig. 20 and Fig. 21 show a variant of the fourth embodiment. In the fourth embodiment described above, the name solution process between each communication unit and CPU unit is done in advance between respective units before the connection ID setup process takes place. In contrast, in this variant, the name solution on the side of the target is to be done in the course of process steps of setting the connection ID.

(0) Respective preparation process functions of a variable table of the first CPU unit 11a, that of the second CPU unit 11b, communication buffer table of the first communication unit 12a, and that of the second communication unit 12b are similar to the third embodiment described above.

Next, the name solution process and connection ID process are carried out, and the communication units having a smaller node address sequentially execute these processes. Thus, in this embodiment, the processes are executed when the first communication unit is the originator. Now we describe the processes by using Fig.20.

(1) The first communication 12a requests the first CPU unit 1a for a variable name of the communication setup information. In fact, first, it makes an inquiry about the variable name of "Switch1". In addition, the request for name solution in the communication unit on the side of originator can be alternatively executed based on the variable name stored in the communication buffer table, rather than based on the variable name stored in the communication setup information, as described herein. A name solution process requested by the communication unit on the side of originator side may be made one by one for every variable or together for more than one variable name such as "Switch1" or "Switch2".

(2) The first CPU Unit 11a refers to the variable table in accordance with received request for name solution and sends back the corresponding real address (DM100) and type (size). The first CPU unit 11a does not have to return the type (size).

(3) The first communication unit 12a on the side of originator creates a temporary internal table based on the information returned from the first CPU unit 11a and the communication setup information retained by itself. In fact, the temporary internal table for "Switch1" and "Switch1" are created. In addition, if the table number of the communication buffer table is not described in the communication setup information, a temporary internal table will be created when the first communication unit 12a refers to the communication buffer table and obtains the table number. The data structure of the temporary internal table to be created is similar to the fourth embodiment.

(4) In response to the command to establish communications from the communication setup tool 30, the first communication unit 12a (#1) on the side of the originator makes a request for establishment of communications to the second communication unit 12b (#2) on the side of the target based on the temporary internal table. The information to be transmitted with the request for establishment of communications include the variable name of the counterpart station/size/direction/cycle. The request for establishment of communications is made one by one. In the figure, the request for establishment of communications that corresponds to the variable name of the local station stored in the temporary internal table and that has "READY/1W/OUT/5ms" is made. Needless to say, the direction of communications "OUT" may be omitted. Also, the variable name of the local station may be included in the request for establishment of communications. In addition, since the node address of the local station and that of the counterpart station are included in the frame header of the request for establishment of communications, the communication unit that has received the request will know from which communication unit at which node address the request for establishment of communications has been sent.

(5) The second communication unit 12b that has received the request for establishment of communications requests the second CPU unit 1b for name solution for the received variable name. In the illustrated example, the second communication unit 12b makes a request to inquire about a real address of the variable name "READY".

(6) The second CPU unit 1b refers to the variable table in response to the request for name solution, obtains the memory address and type (size) corresponding to the variable name (DM200/1W) , and sends them back to the second communication unit 12b.

(7) The second communication unit 12b checks the request for establishment of communications received from the first communication unit 12a, based on the memory address and type (size) obtained from the second CPU unit 11b. As the process here is similar to the variant of the second embodiment and that of the third embodiment, we omit the description thereof. If the request is correct and the second communication unit 12b authorizes the request for establishment of communications, it creates a temporary internal table for the variable name (READY). The data structure of the temporary internal table is similar to the fourth embodiment. Here, the temporary internal table is created at once for the variable name that is the subject of the current process, from the received request for establishment of communications and the correspondence relation between the variable name and real address obtained from the name solution process. In fact, the temporary internal table that stores all information related to "READY" is created. In addition, the second communication unit 12b displays "Requested Condition OK" and "Content of Establishment of Communications" in the monitor of the communication setup tool 30.

(8) When the second communication unit authorizes the request for establishment of communications, the second communication unit 12b identifies the connection ID and sends back the identified connection ID and a "establishment request approval notice" to the first communication unit 12a. Then, the second communication unit 12 may send the real cycle together.

The request for establishment of communications is made in terms of a connection ID, namely, one by one for every variable name. If the connection ID setup process for "READY" completes, the connection ID setup process for "STOP" will be executed next. This could create the temporary internal table for "STOP" and set the connection ID. With this, a connection table is also created.

As the data for which the first communication unit 12a is the originator has the 2 variable names of the local station, namely, Switch1 and Switch2, the connection ID setup process to the communication setup information of the first communication unit 12a completes when the connection ID setup for the 2 variables mentioned above ends. Then, as shown in Fig. 21, the second communication unit 12b with the next smaller node address of #2 issues a request for establishment of communications.

(1) The second communication unit 12b makes a request for name solution to the second CPU unit 11b for the variable name of the communication setup information. In fact, it makes an inquiry about the variable name of "STATUS".

(2) The second CPU unit 11b refers to the variable table in response to the received request for name solution and sends back the corresponding real address (DM250) . Then, the second CPU unit 11b may return the type (size) together.

(3) The second communication unit 12b on the side of the originator additionally creates a temporary internal table for "STATUS" based on the information returned from the second CPU unit 11b and the communication setup information retained by itself. The temporary internal tables for "READY" and "STOP" were already created while the process based on the request for establishment of communications from the first communication unit described by using Fig. 20 was executed. This could create temporary internal tables for all the variables handled by the second communication unit 12b.

(4) In response to the command to establish communications from the communication setup tool 30, for the variable name stored in the communication setup information, the second communication unit 12b (#2) on the side of the originator makes a request for establishment of communications to the first communication unit 12a (#1) on the side of the target, based on the temporary internal table. The request for establishment of communications is made one by one. In the figure, the request for establishment of communications that corresponds to the variable name of the local station "STATUS" stored in the temporary internal table and that has "M_ST/1W/OUT/5ms" is made. Here "OUT" may be omitted. The variable name of the local station may be included in the request for establishment of communications. In addition, in the frame header of the request for establishment of communications, the node address of the local station and that of the counterpart station are stored.

(5) The first communication unit 12a that has received the request for establishment of communications makes a request for name solution to the first CPU unit 11a for the received variable name. In the illustrated example, the first communication unit 12a makes a request to inquire about the real address of the variable name "M_ST".

(6) The first CPU unit 11a refers to the variable table in response to the request for name solution, obtains the memory address and type (size) corresponding to the variable name (DM150/1W) , and sends them back to the first communication unit 12a.

(7) The first communication unit 12a checks the request for establishment of communications received from the second communication unit 12b based on the memory address and type (size) obtained from the first CPU unit 11a. As the specifics of this check process are similar to those of the second communication unit 12b as described above, we herein omit the description thereof.

If the request is correct and the first communication unit authorizes the request for establishment of communications, it creates a temporary internal table. The data structure of this temporary internal table is similar to the fourth embodiment. Here the temporary internal table is created at once for the variable name that is the subject of the connection ID setup process, from the received request for establishment of communications, the correspondence relation between the variable name and real address obtained from the name solution process, and the table number of the communication buffer table. In fact, the temporary internal table that stores all information related to "M_ST" is created. In addition, the first communication unit 12a displays "Requested Condition OK" and "Content of Establishment of Communications" in the monitor of the communication setup tool 30.

(8) When the first communication unit 12a authorizes the request for establishment of communications, it identifies a connection ID and sends back the identified connection ID and an "establishment request approval notice" to the second communication unit 12b. Then, the first communication unit 11a may send the real cycle together.

Then, similar to the fourth embodiment, both the first communication unit 12a and the second communication unit 12b create connection tables. The final connection tables to be created here will be same as Fig. 19. After communication is established for all of the variables, communications will be conducted among communication units by employing the connection ID.

As described above, although we describe variants of the second to fourth embodiments in the second to fourth embodiments, it would be preferable if the following were done in any of the embodiments.

First, a request for communications to be issued by the originator shall include a node address of the local station (node address on the side of the originator) , variable name of the local station (variable name on the side of the originator), node address of the counterpart node, data size (size of data for communications), direction (whether it is transmission or reception) , and the cycle. For the variable name of the local station (variable name on the side of the target) and the variable name of the counterpart station (variable name on the side of the target) , since the originator originally memorizes a relation between the two, either of them may be omitted. In addition, as the data size (size of data for communications) is the information also memorized by the originator, it may be omitted.

When the originator receives a communication approval from the target, it overwrites the cycle in the communication setup information with the cycle communications of which was approved, and memorizes it. This would allow the user to check the communication setup information of the originator and keep track of the communications involved as the originator. It would also be acceptable if all information related to the communication setup information herein were held as a table.

In addition, it is preferable that the target memorizes the information obtained through the communication establishment processes at the target all together. For instance, it would be fine if a memory area in which communication setup information can be newly stored is prepared, where information including that on a connection ID, node address of the local station (node address on the side of the target), variable name of the local station (variable name on the side of the target), node address of the counterpart node (node address on the side of the originator), variable name of the counterpart station (variable name on the side of the originator), data size (size of data for communications), direction (whether it is transmission or reception) and cycle (cycle communications of which was authorized) may be separately stored. With this, the user can know content of communications based on the variable names by checking stored information of the communication setup information involved as the target.

As shown in the third and fourth embodiments and their variants, one communication unit may play a role of both the originator and target. Even in this case, as one communication unit may have the communication setup information after establishment of communications as the originator and the communication setup information after establishment of communications as a target, the user can know content of communications based on the variable name by memorizing them.

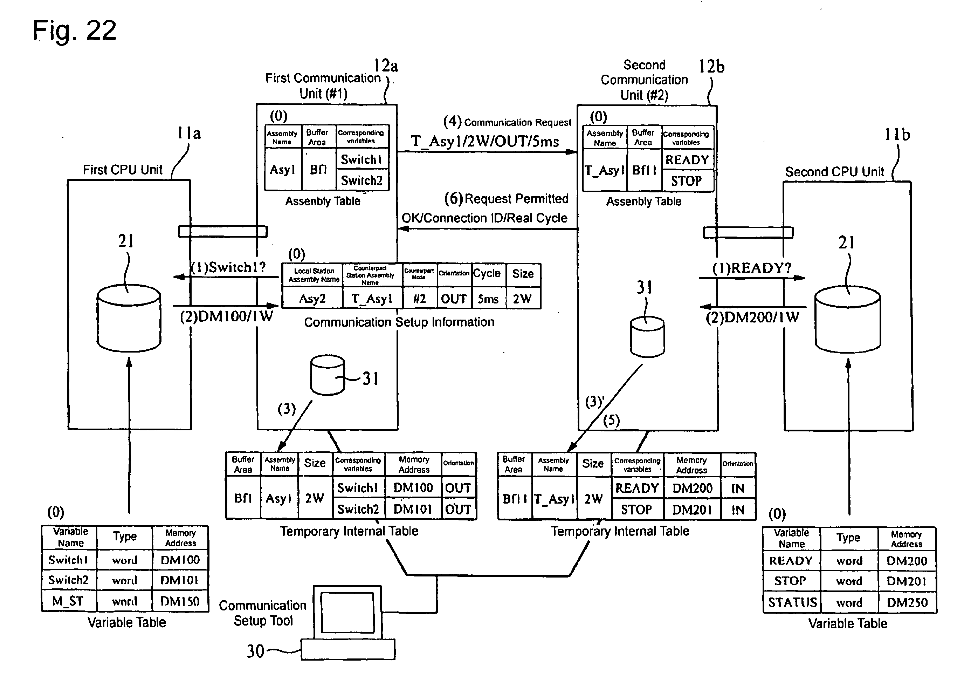

Fig. 22 shows a fifth embodiment of the invention. In the respective embodiments described above, one connection ID was set for one variable name. Unlike them, in this embodiment, a plurality of variable names are grouped, so that more than one piece of data can be transmitted and received at the same time. Data to be grouped shall have a common counterpart of communication, identical cycle, and same direction of communications. Since a request for establishment of communications is made on the side of the originator, "OUT data" that has a common target and identical cycle can be grouped, in accordance with the conditions of grouping described above. In addition, "IN data" that has a common target and same interval can also be grouped.

For instance, in the case of the second embodiment, since "Switch1" and "Switch2" are "OUT" data having not only a same target, namely, the second communication unit 12b, but also identical cycle of 5ms, they can be grouped. As "M_ST" does not have other data that satisfies the conditions of grouping, it shall independently set a connection ID and conduct communication. In the following, we describe name solution process and connection ID setup process for data that characterizes the invention and that can be grouped and transmitted.

(0) Manipulating the communication setup tool 30, a user creates an assembly table for management of data to be grouped, and stores it in each communication unit. The assembly table is similar to the communication buffer table in the second embodiment, etc. and has the table structure that associates an assembly name, buffer area and corresponding variables. In the column of corresponding variables, variable names to be grouped are stored. The buffer area is where data corresponding to a variable name is stored, and size of the buffer area dictates the number of data pieces that can be grouped.

Manipulating the communication setup tool 30, the user generates communication setup information to store in the first communication 12a that is the originator and stores it. The communication setup information has the table structure that associates an assembly name of the local station, node address that identifies the counterpart station, assembly name of the counterpart station, data size, direction, and cycle. The data size shall be a sum of data size of respective data pieces to be grouped.

Needless to say, manipulating the communication setup tool 30, the user not only creates each variable table and stores it in the corresponding CPU unit, but also generates a communication buffer table or communication setup information for data not to be grouped and stores them in the corresponding communication unit.

(1) A name solution process whereby a communication unit associates a variable name with a real address is done for every variable name, and thus executed similar to the second embodiment. In fact, the communication unit obtains a variable name stored in the assembly table, and makes an inquiry to the CPU unit to which it is connected about a real address of the obtained variable name. When making the inquiry, the user may arbitrarily set the number of variables: He/she may make an inquiry one by one or make inquiries all together.

(2) On receipt of an inquiry, each CPU unit refers to the variable table, and returns the real address and type (size) of the variable name. The processes (1) and (2) mentioned above are executed with appropriate timing between each communication unit and CPU unit.

(3) The first communication unit 12a on the side of the originator memories the information that the name is solved. For instance, the temporary internal table can be used as a storage area. In addition, since even "direction" is identified in the communication setup information on the side of the originator provided with the communication setup information, the temporary internal table completes, as shown in Fig. 22. The temporary internal table is the table that associates information that identifies the buffer area of the assembly table (Bf1, in the figure) , assembly name of the local station, data size of the entire group, grouped variable names, real addresses and directions. As seen clearly in the figure, a series of table is created in terms of a group.

(3) The second communication unit 12b on the side of the target stores information that the name is solved. For instance, the temporary internal table can be used as a storage area. In addition, since "direction" cannot be identified on the side of the target that ha no communication setup information, a temporary internal table as a result of executing the process will have the direction left blank.

(4) Next, we describe the connection ID setup process steps. Starting with smaller node numbers, the originators sequentially make a request for establishment of communications to the target. The request for establishment of communications is based on the fact that the tool 30 has issued the command to establish communications, and is sequentially issued to the communication units that shall be the counterpart of the data to be processed, by respective communication units.

The request for establishment of communications is made in terms of assembly, for grouped data. In fact, the request for establishment of communications transmits information on an assembly name of the counterpart station, data size, direction and cycle to the counterpart node. Needless to say, since the node address (#1) of the local station is stored in the header of the transmission frame, the communication unit that has received it will know from which communication unit at which node address the request for establishment of communications has been sent.

Therefore, as in the fifth embodiment shown in Fig. 22, firstly, the first communication unit 12a with such a smaller node address as #1 runs. Needless to say, for data not grouped, as with the second embodiment, etc. , a request for establishment of communications is made for every variable name.

(5) The target that has received the request for establishment of communications (the second communication unit 12b) checks the request. In fact, it accesses to the temporary internal table and checks whether there is the assembly name for which the request for establishment of communications was made. Then, if the assembly name exists, the target will check if the size matches. If it does, the second communication unit 12b enters "IN" that is opposite to the received direction, in the column "direction" corresponding to "READY" and "STOP" of the temporary internal table that were blank.

In addition, although presence or absence of an assembly name may be checked based on the temporary internal table, as described above, the invention is not limited to this, and the check may also be made based on the assembly table. Furthermore, it would be also acceptable if presence or absence of an assembly name were double-checked based on both the temporary internal table and assembly table.

(6) In addition, the target compares the real cycle with the requested cycle, and checks if it is possible to correspond. If so, the target identifies a connection ID, and displays "Requested Condition OK" and "Content of Establishment of Communications" in the monitor of the communication setup tool 30. Then the target notifies "Requested Condition OK" and the connection ID to the originator that has issued the request for establishment of communications. Then, it may send the real cycle together. Since the real cycle on the side of the target is stored in its system memory, the targets reads it out and notifies it together with the connection ID, etc. If the target cannot handle with the requested cycle, it shall handle with the steps similar to the second embodiment.

The connection ID is comprised of a node address of the originator-address of the target-serial number. The serial number is assigned in the order of processes. Thus, when the request for establishment of communications is issued first for "T_Asyl" mentioned above, the second communication unit 12b that is the target sets the connection ID of "#1#2-001" for the data of T_Asyl.

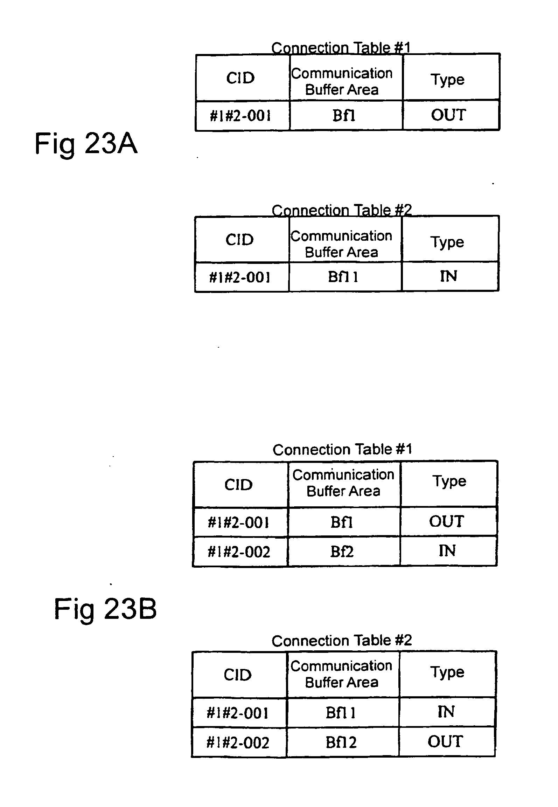

When the target that has received the request for establishment of communications issues a request approval notice together with the connection ID, connection tables having the data structure shown in Fig. 23A are created on the originator and target. The connection tables are sequentially created and updated whenever one connection ID is assigned.

In addition, in this embodiment, for data that cannot be grouped, a connection ID is set in terms of a variable name, in accordance with the method described in the second embodiment, etc. Although the set connection ID is managed by the connection table, it is formed separately from the connection table that uses grouped assembly names as shown in Fig. 23A. In addition, registration of the information on one variable name that cannot be grouped in the assembly table would enable unified management with a same connection table. In this case, for Bf2, data of only M_ST will be stored, for instance.

If the connection ID is set for all data, data is transmitted/received between the first communication unit 12a and second communication unit 12b by employing the connection ID. Thus, the data that has been grouped will be transmitted all together.

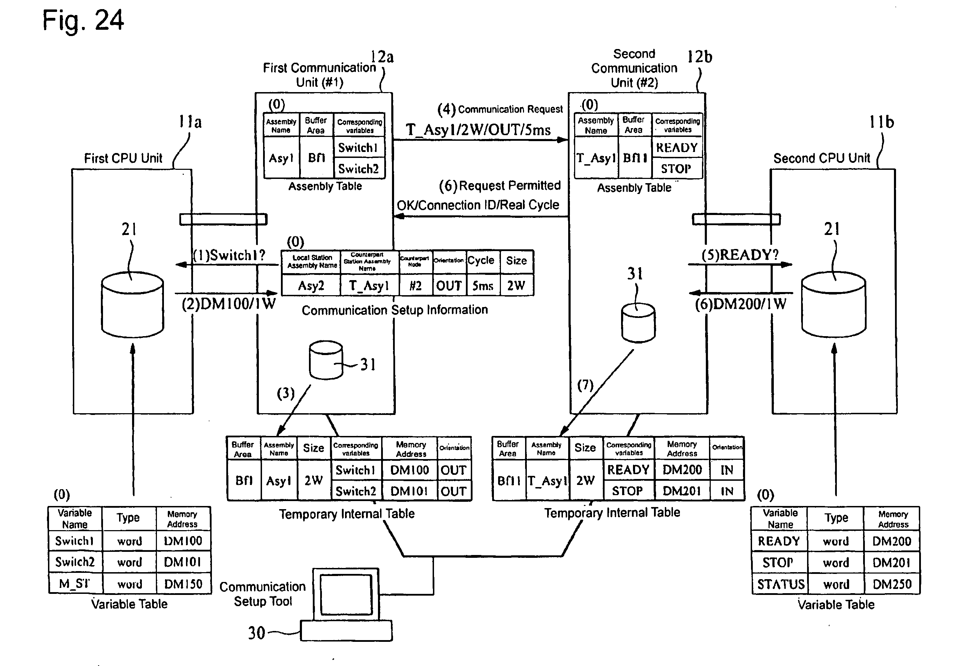

Fig. 24 shows a variant of the fifth embodiment. In the fifth embodiment described above, the name solution process between each communication unit and CPU unit is done by respective units in advance before the setup process of connection ID takes place. In contrast, in the variant, the name solution on the side of the target is done in the course of the process steps of setting a connection ID.

(0) In fact, manipulating the communication setup tool 30, the user generates a variable table for the first CPU unit 11a, that for the second CPU unit 11b, assembly table for the first communication unit, and that for the second communication unit, and downloads respective tables to corresponding units. Furthermore, manipulating the communication setup tool 30, the user generates communication setup information and stores it in the first communication unit 12a. The content of respective tables or communication setup information are similar to the fifth embodiment.

(1) Next, the first communication unit 12a makes a request for name solution to the first CPU unit 11a for the variable name of the local station stored in the communication setup information. This request for name solution is to make an inquiry about a real address of the memory of the first CPU unit 11a in which data corresponding to the variable name of the local station is stored. Here Switch1 and Switch2 are grouped, and an inquiry about name solution may be sequentially made one by one or all together. In addition, the name solution request in the communication unit to be on the side of the originator can be executed based on the variable name stored in the assembly table, instead of the variable name stored in the communication setup information.

(2) The first CPU unit 11a refers to the variable table in response to the received request for name solution and sends back the corresponding real address (memory address). Then, the first CPU unit transmits the type together.

(3) The first communication unit 12a on the side of the originator creates a temporary internal table based on the information returned from the first CPU unit 11a (real address, type) and the communication setup information retained by itself. The data structure of the temporary internal table to be created is similar to the fifth embodiment and the table is created in terms of a group.

(4) In response to the command to establish communications from the communication setup tool 30, the first communication unit 12a (#1) on the side of the originator makes a request for establishment of communications to the second communication unit 12b (#2) based on the temporary internal table. The information to be transmitted together with the request for establishment of communications includes an assembly name of the counterpart station/size/direction/cycle. Therefore, to be specific, the first communication unit 12a issues a request for establishment of communications having "T_Asy1/2WS/OUT/5ms" to the second communication unit 12b. The variable of the local station may be included in the request for establishment of communications. In addition, in the header of the request for establishment of communications the node address of the local station and that of the counterpart station are stored.

(5) The second communication unit 12b that has received the request for establishment of communications makes a request for name solution to the second CPU unit 11b for the received variable name. Then, as the request for establishment of communications is in terms of a group, there are more than one variable name to be identified by an assembly name. Then, the second communication unit refers to the assembly table, obtains the corresponding variable name, and requests the second CPU unit 11b for name solution for the obtained variable names one by one. In the illustrated example, the second communication unit 12b makes a request to inquire about a real address for the first variable "READY". Needless to say, it may request name solution for all of the variable names in the assembly all together.

(6) The second CPU unit 11b refers to the variable table in response to the request for name solution, obtains the real address and type (size) corresponding to the variable name, and sends them back to the second communication unit 12b. In the figure, the second CPU unit 11b returns "DM200/1W (meaning one word)" to "READY" for which an inquiry was made. If it makes a request for name solution one by one, it shall repeat (5) and (6) for predetermined number of times, and executes name solution of all the variables belonging to the assembly name.

(7) The second communication unit 12b checks the request for establishment of communications received from the first communication unit 12a based on the memory address and type (size) obtained from the second CPU unit 11b. As the specific check items are similar to the fifth embodiments, we omit them.

If the request is correct and the second communication unit 12b authorizes a request for establishment of communications, it creates a temporary internal table. The data structure of the temporary internal table is similar to the fifth embodiment. Here the temporary internal table is created at once for the assembly name that is now the subject of the connection ID setup process, from the received request for establishment of communications and the correspondence relation between the variable name and real address obtained from the name solution process. In addition, the second communication unit 12b displays "Requested Condition OK" and "Content of Establishment of Communications" in the monitor of the communication setup tool 30.

(8) When the second communication unit 12b authorizes a request for establishment of communications, it identifies a connection ID and sends back the identified connection ID and an "establishment request approval notice" to the first communication unit 12a. Then, the second communication unit b may transmit the real cycle together.

In the following, similar to the fifth embodiment, both of the first communication unit 12a and the second communication unit 12b create connection tables. Furthermore if there exist more than one assembly name, they repeatedly execute the processes (4) to (8) mentioned above for every assembly variable name, make a request for establishment of communications and set connection IDs for all assembly names. Similarly to the fifth embodiment, as communications will be conducted among the communication units by employing the connection ID after communications are established, we omit the description thereof.

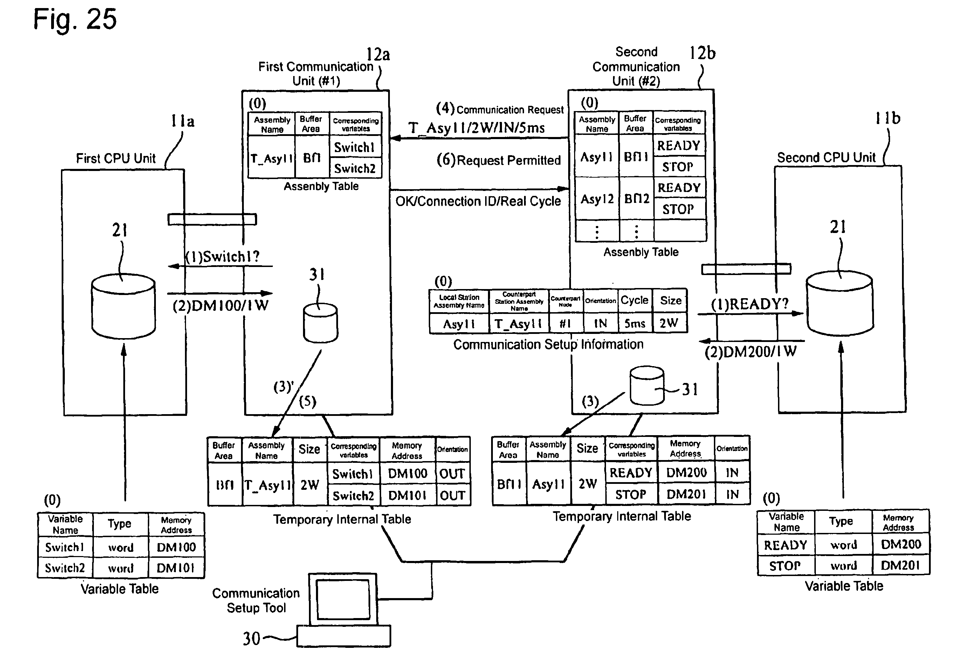

Fig. 25 shows the sixth embodiment of the invention. Similarly to the third embodiment, this embodiment is based on the assumption that the receiving side is set to be the originator, and applies grouping as with the fifth embodiment. The conditions of grouping are similar to the fifth embodiment. However, since the receiving side is set to be the originator, "IN data" that actually has a common target and identical cycle will be grouped. In the following, we describe the name solution process for the data to be grouped and transmitted that characterizes the embodiment as well as the connection ID setup process.

(0) Manipulating the communication setup tool 30, the user creates an assembly table for managing data to be grouped, and stores it in each communication unit. The assembly table has the data structure similar to the fifth embodiment. However, assembly names will differ because the relation between the originator and target is opposite to that of the fifth and sixth embodiments. In fact, in the fifth and sixth embodiments, in order to make it easier to understand association of assembly names between the originator and target, an assembly name of the target shall be the assembly name of the originator with "T_" prefixed. For this reason, the assembly name to be stored in the assembly table of the second communication unit 12b is a name "Asy" followed by any appropriate number, and the assembly name to be stored in the assembly table of the first communication unit 12a starts with "T_".

Manipulating the communication setup tool 30, the user also generates communication setup information to store in the second communication unit 12b that is the originator, and stores it in the second communication unit 12b. The communication setup information has the table structure that associates the assembly name of the local station, node address that identifies the counterpart station, assembly name of the counterpart station, data size, direction and cycle. The data size shall be a sum of data size of each data to be grouped. In addition, in the second embodiment, since the receiving side is set to be the originator, direction in the communication setup information must be "IN". Then, as with the third embodiment, the column of direction in the communication setup information may be omitted.

Needless to say, manipulating the communication setup tool 30, the user not only creates each variable table and stores it in the corresponding CPU unit, but also generates a communication buffer table or communication setup information for data not to be grouped and stores them in the corresponding communication unit.

(1) The name solution process whereby the communication unit associates a variable name with a real address takes place before the connection ID setup process. In fact, similar to the fifth embodiment, the communication unit obtains the variable name stored in the assembly table, and makes an inquiry to the CPU unit to which it is connected about a real address of the variable name. The number of variable names when making the inquiry may be set arbitrarily, and inquiries may be made one by one or all together.

(2) Upon receipt of an inquiry, each CPU unit refers to the variable table, and sends back a real address and type (size) corresponding to the variable name. These processes of (1) and (2) shall be executed with appropriate timing between the communication unit and CPU unit.

(3) The second communication unit 12a on the side of the originator stores the information that the name is solved. For instance, the temporary internal table can be used as a storage area. In addition, on the side of originator provided with the communication setup information, even "direction" is identified in the communication setup information, and thus the temporary internal table is complete, as shown in Fig. 25. The temporary internal table is the table that associates information that identifies the buffer area in the assembly table (Bf11 in the figure), the assembly name of the local station, data size of the entire group, grouped variable names, real addresses and direction. As evidenced by the figure, a series of tables are created in terms of a group.

(3)' The first communication unit 12a on the side of the target stores the information that the name is solved. For instance, the temporary internal table can be used as a storage area. In addition, on the side of the target that has no communication setup information, as "direction" cannot be identified directly, a temporary internal table resulting from execution of this process has the column of "direction" left blank. Furthermore, since the target side is the sending side, "direction" will be "OUT". Then, when creating a temporary internal table, the first communication unit 12a may store "OUT" in the column of "direction".

(4) Next, we describe the connection ID setup process steps. Starting with smaller node numbers, the originators sequentially make a request for establishment of communications to the target. The request for establishment of communications is based on the fact that the tool 30 has issued the command to establish communications, and respective communication units shall issue a request for establishment of communications to the communication units that are the communication counterpart of the data to be processed sequentially. For grouped data, the request for establishment of communications is made in terms of an assembly. In other words, the request for establishment of communications sends information on the assembly name of the counterpart station, data size, orientation and cycle to the counterpart node. Needless to say, since in the header of the transmission frame, the node address of the local station is also stored as sender information, the communication unit that has received it will know from which communication unit at which node address the request for establishment of communications has been sent.

In the example of Fig. 25, since the minimum node number of the communication unit provided with the communication setup information is #2, the second communication unit 12b executes the request for establishment of communications. In fact, the second communication unit 12b issues a request for establishment of communications having "T_Asy11/2W/IN/5ms" to the first communication unit 12b. Needless to say, for data not grouped, it makes a request for establishment of communications for every variable name, as with the third embodiment.

(5) The target that has received the request for establishment of communications (the first communication unit 12a) checks the request. In fact, it accesses to the temporary internal table and checks whether there is the assembly name for which the request for establishment of communications was made. If the assembly name exists, the target will check if the size matches. If it does, the first communication unit 12a , the first communication unit 12a enters "OUT" that is opposite to the received direction, in the column "direction" corresponding to "Switch1" and "Switch2" of the temporary internal table that were blank. In addition, in the process of (3)' , if a provisional temporary internal table having "OUT" stored in the column "direction" was created, the unit confirms that the corresponding column is now "OUT" and determines the content.

In addition, although presence or absence of an assembly name may be checked based on the temporary internal table, as described above, the invention is not limited to this, and the check may also be made based on the assembly table. Furthermore, it would be also acceptable if presence or absence of an assembly name were double-checked based on both the temporary internal table and assembly table.

(6) In addition, the target compares the real cycle with the requested cycle, and checks whether it is possible to correspond. If so, the target identifies a connection ID, and displays "Requested Condition OK" and "Content of Establishment of Communications" in the monitor of the communication setup tool 30. Then the target notifies "Requested Condition OK" and the connection ID to the originator that has issued the request for establishment of communications. Then, it may send the real cycle together. Since the real cycle on the side of the target is stored in its system memory, the targets reads it out and notifies it together with the connection ID, etc. If the target cannot handle with the requested cycle, it shall handle with the steps similar to the second embodiment.

The connection ID is comprised of a node address of the originator-address of the target-serial number. The serial number is assigned in the order of processes. Thus, when the request for establishment of communications is issued first for "T_Asyl1" mentioned above, the second communication unit 12b that is the target sets the connection ID of "#2#1-001" for the data of T_Asyl1.

If there exist more than one assembly name registered in the assembly table, the processes (4) to (6) are repeatedly executed for every assembly variable name mentioned above, and connection IDs shall be set for all assembly names.

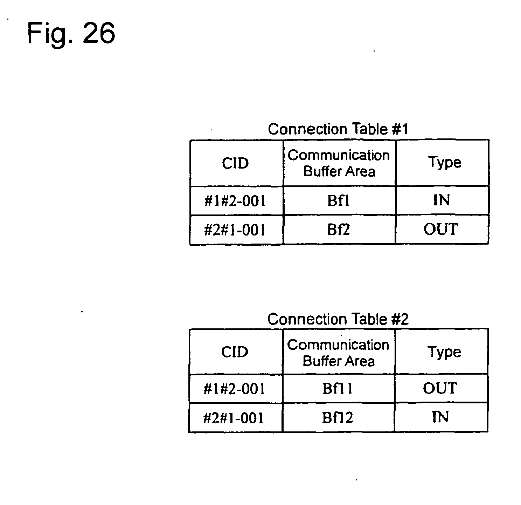

When the target that has received the request for establishment of communications issues a request approval notice together with the connection ID, connection tables having the data structure as shown in Fig. 26 are created in the originator and target. The connection tables are sequentially created and updated whenever one connection ID is assigned.

If the connection IDs are set for every data, data will be transmitted and received by employing the connection IDs between the first communication unit 12a and the second communication unit 12b. Thus, the grouped data shall be transmitted all together.

Although we omit specific illustrations, also in the sixth embodiment, the name solution on the side of target may be executed while the connection ID setup process is being done, similar to variant of the fifth embodiment. In addition, as in the fourth embodiment and its variant, the above grouping technique can also be applied, when the sending side is set to be the originator.

In addition, in Fig. 22, Fig. 24 and Fig. 25, although the assembly table associates an assembly name, buffer area, and corresponding variables so that they can form a part, it may be managed, for instance, by being divided into 2 tables, namely, a table that associates the assembly name and buffer area and a table that associates the assembly and the corresponding variables. Division of the assembly table into 2 tables and managing them as such can also apply to the communication buffer table shown in the second to fourth embodiments and their variants.

In the above, although we described the fifth and sixth embodiments and their variants, the following would be preferable in any embodiment.

First, a communication request to be issued by the originator shall include a node address of the local station (node address on the side of the originator), assemble name of the local station (assemble name on the side of the originator), node address of the counterpart station (node address on the side of the target), assemble name of the counterpart station (assemble name on the side of the target), data size (size of data for communications), direction (whether it is transmission or reception) and cycle.

On the one hand, a request approval notice that the target sends to the originator shall include an assemble name of the local station (assemble name on the side of the target), assemble name of the counterpart station (assemble name on the side of the target), data size (size of data for communications), and direction (whether it is transmission or reception), in addition to an approval notice (OK/NG), connection ID, node address of the local station (node address on the side of the target), node address of the counterpart station (node address on the side of the originator), and cycle. Among them, for the assemble name (assemble name on the side of the target) and that of the counterpart station (that on the side of the target), since the originator originally memorizes a relation between the two, either of them may be omitted. In addition, as the data size (size of data for communications) is the information also memorized by the originator, it may be omitted.

When the originator receives a communication approval from the target, it overwrites the cycle in the communication setup information with the cycle communications of which was approved, and memorizes it. This would allow the user to check the communication setup information of the originator and keep track of the communications involved as the originator. It would also be acceptable if all information related to the communication setup information herein were held as a table.

In addition, the target preferably memorizes a communication request from the originator, and information obtained through the communication establishment process at the target all together. For instance, it would be fine if a memory area in which communication setup information can be newly stored is prepared, where information including that on a connection ID, node address of the local station (node address on the side of the target), assemble name of the local station (assemble name on the side of the target), node address of the counterpart node (node address on the side of the originator), assemble name of the counterpart station (assemble name on the side of the originator), data size (size of data for communications), direction (whether it is transmission or reception) and cycle (cycle communications of which was authorized) may be separately stored. With this, the user can know content of communications based on the variable names by checking stored information of the communication setup information involved as the target.

In addition, as in the fifth and sixth embodiments and their variants, one communication unit may play a role of both the originator and target. Even in this case, as one communication unit may have the communication setup information after establishment of communications as the originator and the communication setup information after establishment of communications as a target, the user can know content of communications based on the variable name by memorizing them.

## Claims

1. A controller system having a first programmable controller (10a) and a second programmable controller (10b), which are connected through a network (15),
the first programmable controller (10a) comprising:
a first controller (11a) having a variable table that associates and stores a first physical address of a first memory in which data is stored, with a first variable name corresponding to the data; and
a first communication unit (12a) having
a communication setup information memory device that stores communication setup information identifying a relation of the first variable name targeted for communication with a second communication unit (12b) of the second programmable controller (10b), and a second variable name used in the second programmable controller (11b);
a first table that associates and stores the first variable name targeted for communication and a buffer area which buffer area is adapted to temporarily store data corresponding to the first variable name or the second variable name;
a device of resolving variables that obtains the first physical address corresponding to the first variable name stored in the first table by making an inquiry to the first controller (11a) of the first programmable controller (10a) with predetermined timing, and stores and retains a second table that associates the first variable name with the acquired first physical address; and
a communication establishment device for establishing a communication by sending a request including the second variable name used in the second programmable controller (10b), which second variable name is in relation with the first variable name targeted for communication, to the second programmable controller (10b);
the second programmable controller (10b) comprising:
a second controller (11b) having a variable table that associates and stores a second physical address of a second memory in which data is stored, with a second variable name corresponding to the data, which second variable name is in relation with the first variable name targeted for communication; and
a second communication unit (12b) having
a first table that associates and stores the second variable name which is in relation with the first variable name targeted for communication and a buffer area, which buffer area is adapted to temporarily store data corresponding to the first variable name or the second variable name;
a device of resolving variables that receives the request including the second variable name from the first programmable controller (10a) and obtains a second physical address corresponding to the second variable name by making an inquiry to the second controller (11b) of the second programmable controller (10b), and stores and retains a second table that associates the second variable name with the acquired second physical address; and
a communication establishment device for establishing the communication by responding to the request from the first programmable controller (10a),
wherein the controller system is adapted to communicate data corresponding to the first or second variable names between the buffer areas of the first and second communication units (12a, 12b) when the communication is established.

## Patentansprüche

1. Steuereinrichtungsanordnung mit einer ersten programmierbaren Steuereinrichtung (10a) und einer zweiten programmierbaren Steuereinrichtung (10b), wobei die Steuereinrichtungen (10a, 10b) über ein Netzwerk (15) miteinander verbunden sind,
wobei die erste programmierbare Steuereinrichtung (10a) aufweist:
eine erste Steuereinrichtung (11a), die eine Variablentabelle hat, die eine physikalische Adresse eines ersten Speichers, in welchem Daten gespeichert sind, mit einem ersten Variablennamen entsprechend den Daten verknüpft und speichert; und
eine erste Kommunikationseinheit (12a) mit
einer Kommunikationseinstellungsinformationspeichereinrichtung, die Kommunikationseinstellungsinformationen speichert, die eine Beziehung des ersten Variablennamens, der auf die Kommunikation mit einer zweiten Kommunikationseinheit (12b) der zweiten programmierbaren Steuereinrichtung (10b) abzielt, und eines zweiten Variablennamens, der in der zweiten programmierbaren Steuereinrichtung (11b) verwendet wird, festlegen;
eine erste Tabelle, die den ersten Variablennamen, der auf die Kommunikation abzielt, und einen Pufferbereich, der eingerichtet ist, Daten entsprechend dem ersten Variablennamen oder dem zweiten Variablennamen temporär zu speichern, verknüpft und speichert;
eine Einrichtung zum Auflösen von Variablen, die die erste physikalische Adresse entsprechend dem ersten Variablennamen, der in der ersten Tabelle gespeichert ist, durch Stellen einer Anfrage an die erste Steuereinrichtung (11a) der ersten programmierbaren Steuereinrichtung (10a) mit vorbestimmter Zeitgebung erhält und eine zweite Tabelle, die den ersten variablen Namen mit der erlangten ersten physikalischen Adresse verknüpft, speichert und hält; und
eine Kommunikationsherstellungseinrichtung zum Herstellen einer Kommunikation durch Senden, zu der zweiten programmierbaren Steuereinrichtung (10b), einer Anforderung, die den zweiten Variablennamen, der in der zweiten programmierbaren Steuereinrichtung (10b) verwendet wird, umfasst, wobei der zweite Variablennamen in Beziehung zu dem ersten Variablennamen, der auf die Kommunikation abzielt, steht; und
wobei die zweite programmierbare Steuerungseinrichtung (10b) aufweist:
eine zweite Steuereinrichtung (11b), die eine Variablentabelle hat, die eine zweite physikalische Adresse eines zweiten Speichers, in welchem Daten gespeichert sind, mit einem zweiten Variablennamen entsprechend den Daten verknüpft und speichert, wobei der zweite Variablennamen in Beziehung zu dem ersten variablen Namen, der auf die Kommunikation abzielt, steht; und
eine zweite Kommunikationseinheit (12b) mit
einer ersten Tabelle, die den zweiten Variablennamen, welcher in Beziehung zu dem ersten variablen Namen, der auf die Kommunikation abzielt, steht und einen Pufferbereich verknüpft und speichert, wobei der Pufferbereich angepasst ist, Daten entsprechend dem ersten Variablennamen oder dem zweiten Variablennamen temporär zu speichern;
eine Einrichtung zum Auflösen von Variablen, die die Anforderung, die den zweiten Variablennamen umfasst, von der ersten programmierbaren Steuereinrichtung (10a) empfängt und eine zweite physikalische Adresse entsprechend dem zweiten Variablennamen durch Stellen einer Anfrage an die zweite Steuereinrichtung (11b) der zweiten programmierbaren Steuereinrichtung (10b) erhält und eine zweite Tabelle, die den zweiten Variablennamen mit der erlangten zweiten physikalischen Adresse verknüpft, speichert und hält; und
eine Kommunikationsherstellungseinrichtung zum Herstellen der Kommunikation durch Antworten auf die Anforderung von der ersten programmierbaren Steuereinrichtung (10a),
wobei die Steuereinrichtungsanordnung eingerichtet ist, Daten entsprechend dem ersten Variablennamen oder dem zweiten Variablennamen zwischen den Pufferbereichen der ersten Kommunikationseinheit und der zweiten Kommunikationseinheit (12a, 12b) zu kommunizieren, wenn die Kommunikation hergestellt ist.

## Revendications

1. Système de contrôle comprenant un premier automate programmable (10a) et un deuxième automate programmable (10b) qui sont connectés à travers un réseau (15),
le premier automate programmable (10a) comprenant :
un premier contrôleur (11a) comprenant une table de variables qui associe et stocke une première adresse physique d'une première mémoire dans laquelle sont stockées des données, avec un premier nom de variable correspondant aux données ; et
une première unité de communication (12a) comprenant
un dispositif de mémoire d'informations de configuration de communication qui stocke des informations de configuration de communication identifiant une relation du premier nom de variable ciblé pour la communication avec une deuxième unité de communication (12b) du deuxième automate programmable (10b) et un deuxième nom de variable utilisé dans le deuxième automate programmable (11b) ;
une première table qui associe et stocke le premier nom de variable ciblé pour la communication et une zone de mémoire tampon, laquelle zone de mémoire tampon est adaptée pour stocker temporairement des données correspondant au premier nom de variable ou au deuxième nom de variable ;
un dispositif de résolution de variables qui obtient la première adresse physique correspondant au premier nom de variable stocké dans la première table en effectuant une interrogation du premier contrôleur (11a) du premier automate programmable (10a) avec une synchronisation prédéterminée, et stocke et conserve une deuxième table qui associe le premier nom de variable avec la première adresse physique acquise ; et
un dispositif d'établissement de communication pour établir une communication en envoyant une demande comprenant le deuxième nom de variable utilisé dans le deuxième automate programmable (10b), lequel deuxième nom de variable est en relation avec le premier nom de variable ciblé pour la communication, au deuxième automate programmable (10b) ;
le deuxième automate programmable (10b) comprenant :
un deuxième contrôleur (11b) comprenant une table de variables qui associe et stocke une deuxième adresse physique d'une deuxième mémoire dans laquelle sont stockées des données, avec un deuxième nom de variable correspondant aux données, lequel deuxième nom de variable est en relation avec le premier nom de variable ciblé pour la communication ; et
une deuxième unité de communication (12b) comprenant
une première table qui associe et stocke le deuxième nom de variable qui est en relation avec le premier nom de variable ciblé pour la communication et une zone de mémoire tampon, laquelle zone de mémoire tampon est adaptée pour stocker temporairement des données correspondant au premier nom de variable ou au deuxième nom de variable ;
un dispositif de résolution de variables qui reçoit la demande comprenant le deuxième nom de variable en provenance du premier automate programmable (10a) et obtient une deuxième adresse physique correspondant au deuxième nom de variable en effectuant une interrogation du deuxième contrôleur (11b) du deuxième automate programmable (10b), et stocke et conserve une deuxième table qui associe le deuxième nom de variable avec la deuxième adresse physique acquise ; et
un dispositif d'établissement de communication pour établir la communication en répondant à la demande en provenance du premier automate programmable (10a),
dans lequel le système de contrôle est adapté pour communiquer des données correspondant aux premier ou deuxième noms de variable entre les zones de mémoire tampon des première et deuxième unités de communication (12a, 12b) quand la communication est établie.
